# EUROPÄISCHE PATENTSCHRIFT

(11) **EP 2 539 350 B1**
(45) Veröffentlichungstag und Bekanntmachung des Hinweises auf die Patenterteilung: **18.09.2013**
(21) Anmeldenummer: 11704582.3
(22) Anmeldetag: 09.02.2011
(51) Int. Cl.: C07F 7/18

(54) **VERFAHREN ZUR HERSTELLUNG ESTERFUNKTIONELLER SILANE**
METHOD FOR PRODUCING ESTER-FUNCTIONAL SILANES
PROCÉDÉ DE FABRICATION DE SILANES À FONCTION ESTER

(30) Priorität: 22.02.2010 DE 102010002202
(43) Veröffentlichungstag der Anmeldung: 02.01.2013
(73) Patentinhaber: Wacker Chemie AG, 81737 München (DE)
(72) Erfinder: DAISS, Jürgen Oliver, 81373 München (DE); STOHRER, Jürgen, 82049 Pullach (DE)
(74) Vertreter: Fritz, Helmut
(86) Internationale Anmeldenummer: PCT/EP2011/051890
(87) Internationale Veröffentlichungsnummer: WO 2011/101278

(56) Entgegenhaltungen:
- WO-A1-2005/103061
- WO-A1-2007/063011

## Beschreibung

Die vorliegende Erfindung betrifft Verfahren zur Herstellung von Silanen, die eine Estergruppe und im Alkoholderivat-Teil des Esters ein Siliciumatom aufweisen.

Esterfunktionelle Silane, die im Alkoholderivat-Teil des Esters ein Siliciumatom aufweisen, sind darstellbar durch die Formel I, an der illustriert ist, welcher Teil des Esters als "Alkoholderivat-Teil" und welcher als "Carbonsäurederivat-Teil" bezeichnet wird:

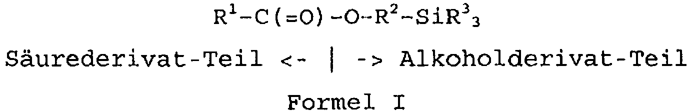

Ist von den Resten R³ keiner hydrolysierbar, so können sie durch Reaktion eines Alkohols der Struktur HO-R²-SiR³₃ mit einer Carbonsäure der Struktur R¹-C(=O)-OH oder mit Derivaten der Carbonsäure (z.B. Ester, Säureanhydrid, Säureazid; allgemeine Struktur: R¹-C(=O)-Y; -Y = -OH, -OAlkyl, -OAryl, -OAcyl, -N₃, - Cl etc) hergestellt werden:

Reaktion 1 R¹-C(=_{O})-Y + HO-R²-SiR³₃ --> R¹-C(=O)-O-R²-SiR³₃ + H-Y

H-Y kann bei Bedarf durch eine Hilfsbase abgefangen werden. Ist zumindest einer der Reste R³ hydrolysierbar, so kondensiert ein Alkohol der Struktur HO-R²-SiR³₃ unter Abspaltung eines Äquivalents H-R³ mit sich selbst, so dass ein Sila-Oxacyclus oder dessen Oligomer entsteht. Auf solche Silane ist der in Reaktion 1 dargestellte Reaktionsweg daher unerwünschterweise nicht anwendbar.

Alternativ können manche dieser esterfunktionellen Silane hergestellt werden, indem ein Ester der Struktur R¹-C(=O)-O-CH=CH₂ oder der Struktur R¹-C(=O)-O-R'-CH=CH₂ durch Hydrosilylierung mit einem Silan, das mindestens eine Si-H-Bindung aufweist, verbunden wird (Reaktion 2). Dieses Verfahren ist jedoch beschränkt auf esterfunktionelle Silane, die zwischen Si-Atom und Esterfunktion mindestens zwei C-Atome aufweisen, die Hydrosilylierung weist häufig schlechte Regioselektivität an der Doppelbindung auf, und die Katalysatoren, die die Hydrosilylierung bewirken, bewirken auch häufig eine Spaltung der C(O)O-C-Bindung als Nebenreaktion, vor allem bei Umsetzungen mit Allylestern.

Bei dem dritten nutzbaren Reaktionstyp zur Herstellung solcher Silane wird ein Salz einer Carbonsäure, ein Carboxylat, mit einem Silan, das an einer Si-gebundenen Kohlenwasserstoffgruppe eine Abgangsgruppe "X" aufweist, umgesetzt:

Reaktion 3 [R¹-C(=O)-O]ₐ[M^{a+}] + a X-R²-SiR³₃ --> a R¹-C(=O)-O-R²-SiR³₃ + [M^{a+}] X⁻ₐ

Dieser Reaktionsweg weist nicht die Nachteile der ersten beiden Wege auf. So ist es beispielsweise auch auf solche Silane anwendbar, die hydrolysierbare Reste R³ oder nur ein Kohlenstoffatom in R² aufweisen. Offensichtlich entsteht bei diesem Weg allerdings das Salz [M^{a+}]X⁻ₐ. Eine wässrige Aufarbeitung zur Abtrennung des Salzes ist nur möglich, wenn das Produkt nicht hydrolyseempfindlich ist, was aber in der Regel der Fall ist, wenn die so hergestellten Silane an einer oder mehrerer der Gruppen R³ eine Reaktivität aufweisen sollen, die eine Nutzung der Silane zur Herstellung von organofunktionellen Siliconen oder zur Feuchtevernetzung erlaubt. Die nichtwässrige Abtrennung des Salzes erfordert einen Zentrifugations- oder Filtrationsschritt. Solche Verfahren sind beispielsweise in der WO 2007 063 011 oder in Monatshefte für Chemie, 2003, Band 134, S. 1081-1092 beschrieben. Das Salz muss aufwändig nachgewaschen werden, und trotz Nachwaschen verbleiben häufig Produktreste im Salz und gehen so verloren. Nach Filtration kann das Filtrat fraktionierend destilliert werden. Würde man den Filtrationsschritt weglassen und direkt vom Salz destillieren, so trocknet das Salz im Zuge der Destillation zunehmend in der Destillationsblase ein, verkrustet diese, die Durchmischung und damit die Trennleistung der Destillation wird zunehmend schlechter, und häufig führt dies zu lokalen Überhitzungen und damit zur Gefahr der Auslösung von exothermem Zersetzungsreaktionen. Das Salz backt während der Destillation in der Destillationsblase fest und lässt sich hernach nur schwer entfernen. Ferner kann unreagiertes Carboxylat bei einer Destillation ohne vorherige Filtration unerwünschte Nebenreaktionen auslösen, wenn R¹, R² oder R³ empfindliche Gruppen enthalten. Wurde ein Lösungsmittel bei der Reaktion oder zum Nachwaschen des Salzes verwendet, so muss zuerst das Lösungsmittel zeitraubend abdestilliert werden, bevor das Produkt gewonnen werden kann. Wünschenswert wäre ein Verfahren, das eine Destillation direkt vom Salz ohne einen Filtrationsschritt erlaubt, wobei möglichst kein Produktverlust dadurch auftreten soll, dass Silan der Formel I am Salz haften bleibt (wie es bei einer Filtration in der Regel der Fall ist), oder das das langwierige Abdestillieren des Lösungsmittels vor der eigentlichen Produktdestillation vermeidet, oder das im besten Fall beides leistet.

Gegenstand der Erfindung ist ein Verfahren zur Herstellung von Silanen der allgemeinen Formel I,

R¹-C(=O)-O-R²-SiR³₃ (I),

durch Umsetzung mindestens eines Salzes einer Carbonsäure der allgemeinen Formel II

[R¹-C(=O) -O]ₐ [M^{a+}] (II),

mit mindestens einem Silan der allgemeinen Formel III

X-R²-SiR³₃ (III),

wobei das Verfahren mindestens einen destillativen Verfahrensschritt aufweist, bei dem das Destillat mindestens ein Silan der allgemeinen Formel I enthält und mindestens ein hochsiedendes Lösungsmittel HS-LM anwesend ist,
wobei HS-LM, gemessen bei dem Druck, bei dem der destillative Verfahrensschritt durchgeführt wird, einen höheren Siedepunkt aufweist als das Silan der allgemeinen Formel I,
und wobei
X eine Abgangsgruppe, die durch ein Carboxylat substituierbar ist,
R¹ einen unsubstituierten oder mit einer oder mehreren Gruppen Q substituierten einbindigen C₁-C₁₈ Kohlenwasserstoffrest, der durch ein oder mehrere Heteroatome unterbrochen sein kann, oder ein Wasserstoffatom,
R² eine unsubstituierte oder mit einer oder mehreren Gruppen Q substituierte zweibindige C₁-C₁₈ Kohlenwasserstoffgruppe, die durch ein oder mehrere Heteroatome unterbrochen sein kann,
R³ Wasserstoff, eine unsubstituierte oder mit einer oder mehreren Gruppen Q substituierte einbindige C₁-C₁₈ Kohlenwasserstoffgruppe, C₁-C₁₈ Kohlenwasserstoffoxygruppe, Si₁-Si₄ Silangruppe oder eine Si₁-Si₄ Siloxygruppe, die durch ein oder mehrere Heteroatome unterbrochen sein kann,
**M^{a+}** ein a-fach positiv geladenes Kation und
**a** ganzzahlige Werte größer oder gleich 1 bedeuten.

Durch das Verfahren kann die Reaktion 3 ausgeführt werden, ohne vor der destillativen Gewinnung des Silans der allgemeinen Formel I (Reaktionsprodukt) zu filtrieren oder ein Lösungsmittel abdestillieren zu müssen, oder beides.

Das hochsiedende Lösungsmittel HS-LM ist bei der destillativen Abtrennung des Silans der allgemeinen Formel I anwesend und kann vor und/oder während des destillativen Verfahrensschritts zugesetzt werden.

Die durch die Carboxylatgruppe der Verbindung der allgemeinen Formel II substituierbare Abgangsgruppe **X** steht vorzugsweise für ein Halogenatom, eine Alkylsulfatgruppe, eine Alkylsulfonatgruppe, eine Arylsulfonatgruppe oder für ein Reaktionsprodukt eines Alkohols an ein Azodicarboxylat, bevorzugt für ein Chlor-, Brom- oder Iodatom, für eine Methansulfonat-, *p*-Toluolsulfonat, *p*-Chlorsulfonat- oder Benzolsulfonatgruppe, besonders bevorzugt für ein Chloratom. **X** ist vorzugsweise an ein Kohlenstoffatom, bevorzugt an eine CH₂-Einheit, innerhalb von R² gebunden.

**R¹, R²** und **R³** können unabhängig voneinander ein oder mehrere Heteroatome aufweisen, durch Heteroatome unterbrochen sein, durch heteroatomhaltige Gruppen Q substituiert sein, acyclisch oder cyclisch oder oligocyclisch sein oder acyclische oder cyclische oder oligocyclische Gruppen aufweisen, gesättigt sein oder olefinische oder alkinische oder aromatische Unsättigung aufweisen oder linear oder verzweigt oder miteinander verbunden sein.

**R¹** ist vorzugsweise durch ein Kohlenstoffatom an die Gruppe C(=O) gebunden oder ist vorzugsweise ein Wasserstoffatom. **R¹** weist vorzugsweise 1 bis 12, bevorzugt 1 bis 8, besonders bevorzugt 1 bis 6 Kohlenstoffatome auf oder ist ein Wasserstoffatom. **R¹** weist vorzugsweise 0 bis 3, bevorzugt 0 oder 1, besonders bevorzugt keine Heteroatome auf. **R¹** weist vorzugsweise 0 bis 3, bevorzugt 0 oder 1, besonders bevorzugt keine Substituenten **Q** auf. Vorzugsweise steht **R¹** für Gruppen H, CH₃, CH₂CH₃ , CH₂CH₂CH₃, CH(CH₃)₂, CH₂CH₂CH₂CH₃, CH₂CH(CH₃)₂, CH(CH₃) (CH₂CH₃), C(CH₃)₃, CH₂CH₂CH₂CH₂CH₃, CH₂CH₂CH₂CH₂CH₂CH₃, CH₂CH₂CH₂CH₂CH₂CH₂CH₃, CH₂CH₂CH₂CH₂CH₂CH₂CH₂CH₃, CH₂CH₂CH₂CH₂CH₂CH₂CH₂CH₂CH₃, CH₂CH₂CH₂CH₂CH₂CH₂CH₂CH₂CH₂CH₃, CH₂CH₂CH₂CH₂CH₂CH₂CH₂CH₂CH₂CH₂CH₃, CH₂CH₂CH₂CH₂CH₂CH₂CH₂CH₂CH₂CH₂CH₂CH₃, CH=CH₂, C(CH₃)=CH₂, *cis*-CH=CHCH₃, *trans*-CH=CHCH₃, CH₂CH₂CH₂CH₂CH₂CH₂CH₂CH₂CH=CH₂, Phenyl, Benzyl, *o*-Methylphenyl, *m*-Methylphenyl, *p*-Methylphenyl, bevorzugt für Gruppen H, CH₃, CH₂CH₃, CH₂CH₂CH₃, CH(CH₃)₂, CH₂CH₂CH₂CH₃, CH₂CH(CH₃)₂, CH(CH₃) (CH₂CH₃), C(CH₃)_{3,} CH₂CH₂CH₂CH₂CH₃, CH₂CH₂CH₂CH₂CH₂CH₃, CH₂CH₂CH₂CH₂CH₂CH₂CH₃, CH=CH₂, C(CH₃)=CH₂, *cis*-CH=CHCH₃, *trans*-CH=CHCH₃, CH₂CH₂CH₂CH₂CH₂CH₂CH₂CH₂CH=CH₂, Phenyl, Benzyl,
besonders bevorzugt für Gruppen H, CH₃, CH=CH₂, C(CH₃₎=CH₂, *cis*-CH=CHCH₃, *trans*-CH=CHCH₃.

**R²** ist vorzugsweise durch ein Kohlenstoffatom an das Silicium-atom gebunden. **R²** ist vorzugsweise durch ein Kohlenstoffatom, bevorzugt durch eine CH₂-Einheit, an die Gruppe **X** gebunden. **R²** weist vorzugsweise 1 bis 12, bevorzugt 1 bis 8, besonders bevorzugt 1 bis 4 Kohlenstoffatome auf. **R²** weist vorzugsweise 0 bis 3, bevorzugt 0 oder 1, besonders bevorzugt keine Heteroatome auf. **R²** weist vorzugsweise 0 bis 3, bevorzugt 0 oder 1, besonders bevorzugt keine Substituenten Q auf. Vorzugsweise steht **R²** für Gruppen -CH₂-, -CH₂CH₂-, -CH₂CH₂CH₂-, -CH₂CH₂CH₂CH₂-, -CH₂-*o*-Phenylen-, -CH₂-*m*-Phenylen- oder -CH₂-*p*-Phenylen-, bevorzugt für Gruppen -CH₂- oder -CH₂CH₂CH₂-, besonders bevorzugt für -CH₂-.

**R³** steht vorzugsweise für eine C₁-C₁₂ Kohlenwasserstoffgruppe, eine C₁-C₁₂ Kohlenwasserstoffoxygruppe oder eine Si₁-Si₄ Siloxygruppe, bevorzugt für eine C₁-C₆ Alkylgruppe, eine Phenylgruppe oder eine C₁-C₆ Alkoxygruppe, besonders bevorzugt Methyl-, Methoxy- oder Ethoxygruppe. Bevorzugt steht mindestens einer der Reste **R³** für eine Kohlenwasserstoffoxygruppe. **R³** weist vorzugsweise 0 bis 3, bevorzugt 0 oder 1, besonders bevorzugt keine Substituenten **Q** auf. Steht **R³** für eine Si₁-Si₄ Silangruppe oder für eine Si₁-Si₄ Siloxygruppe, so sind die Siliciumatome in diesen Gruppen vorzugsweise durch C₁-C₁₂ Kohlenwasserstoffgruppen, die gegebenenfalls Gruppen **Q** oder **X** aufweisen können, durch Wasserstoff oder durch C₁-C₁₂ Kohlenwasserstoffoxygruppen substituiert, bevorzugt durch gegebenenfalls **X** aufweisende C₁-C₆ Alkylgruppen, durch Phenylgruppen oder C₁-C₆ Alkoxygruppen, besonders bevorzugt durch gegebenenfalls Gruppen **X** aufweisende Methyl- oder durch gegebenenfalls in terminaler Position Gruppen **X** aufweisende Propylgruppen, oder durch Methoxy- oder Ethoxygruppen.

**M^{a+}** ist vorzugsweise ein Alkalimetallion, ein Erdalkalimetallion, oder ein Oniumion wie beispielsweise ein gegebenenfalls alkyliertes, aryliertes oder substituiertes Ammoniumion, Phosphoniumion, Amidiniumion oder Guanidiniumion, bevorzugt Lithium, Natrium, Kalium, Magnesium, Calcium, ein gegebenenfalls alkyliertes, aryliertes oder substituiertes Ammoniumion, Phosphoniumion, Amidiniumion oder Guanidiniumion, besonders bevorzugt Natrium, Kalium, ein gegebenenfalls alkyliertes, aryliertes oder substituiertes Ammoniumion, Phosphoniumion, Amidiniumion oder Guanidiniumion.
Ist **M^{a+}** ein gegebenenfalls alkyliertes, aryliertes oder substituiertes Ammoniumion, so wird das Ammoniumcarboxylat vorzugsweise vor oder während der Reaktion mit dem Silan der allgemeinen Formel III durch Umsetzung einer Carbonsäure der Struktur R¹-C(=O)-OH mit Ammoniak oder mit einem Amin erzeugt.

**a** ist vorzugsweise 1 bis 4, bevorzugt 1 bis 2, insbesondere 1.

**Q** wird, wenn es an ein sp³-hybrisiertes Kohlenstoffatom gebunden ist, ausgewählt aus Kohlenwasserstoffoxy-, Acyloxy-, Kohlenwasserstoffcarbonyl-, Carbonyl-, Kohlenwasserstoffoxycarbonyl-, Kohlenwasserstoffsulfid-, Acylsulfid-, Cyano- oder Nitrogruppen,
und wenn es an ein sp²- oder an ein sp-hybridisiertes Kohlenstoffatom gebunden ist, ausgewählt aus Kohlenwasserstoffoxy-, Acyloxy-, Kohlenwasserstoffcarbonyl-, Carbonyl-, Kohlenwasserstoffoxycarbonyl-, Kohlenwasserstoffsulfid-, Acylsulfid-, Cyano- oder Nitrogruppen oder aus den Bedeutungen von X wie oben definiert.

Vorzugsweise weist das Carbonsäuresalz der allgemeinen Formel II einen Wassergehalt von weniger als 10000 ppm, bevorzugt weniger als 1000 ppm, besonders bevorzugt weniger als 100 ppm auf. Vorzugsweise weist das Carbonsäuresalz der allgemeinen Formel II einen Gehalt an freier Carbonsäure von weniger als 10%, bevorzugt weniger als 1%, besonders bevorzugt weniger als 0,1% auf. Vorzugsweise weist das Carbonsäuresalz der allgemeinen Formel II einen Gehalt an basischen Verunreinigungen, wie beispielsweise Alkali- oder Erdalkalihydroxiden, -oxiden, - carbonaten oder -hydrogencarbonaten, von weniger als 10%, bevorzugt weniger als 1%, besonders bevorzugt weniger als 0,1% auf. Das Carbonsäuresalz kann während des Einsatzes oder vor dem Einsatz im erfindungsgemäßen Verfahren getrocknet werden, beispielsweise durch Azeotropieren mit einem wasserschleppenden Lösungsmittel, durch Ausheizen, durch Anlegen von Vakuum, durch Auslagerung über einem Trocknungsmittel, durch einen trockenen Gas- oder Flüssigkeitsstrom oder durch eine Kombination dieser Methoden.

Bevorzugt wird in dem Verfahren genau ein Silan der allgemeinen Formel III eingesetzt. Der Begriff "genau ein Silan der Formel III" wird hierbei über die Reinheit des Silans der allgemeinen Formel III definiert. Vorzugsweise beträgt die Reinheit des Silans der allgemeinen Formel III mehr als 80%, bevorzugt mehr als 90%, besonders bevorzugt mehr als 97%, in Gewichts-% bezogen auf die Summe aller im Verfahren vorhandener Silane der allgemeinen Formel III. Es kann aber auch ein Gemisch aus mehreren Silanen der allgemeinen Formel III eingesetzt werden. Bevorzugt wird in dem Verfahren genau ein Carbonsäuresalz der allgemeinen Formel II eingesetzt. Der Begriff "genau ein Carbonsäuresalz der allgemeinen Formel II" wird hierbei über die Reinheit des Carbonsäuresalzes der allgemeinen Formel II definiert. Vorzugsweise beträgt die Reinheit des Carbonsäuresalzes der allgemeinen Formel II mehr als 80%, bevorzugt mehr als 90%, besonders bevorzugt mehr als 97%, in Gewichts-% bezogen auf die Summe aller im Verfahren vorhandener Carbonsäuresalze der allgemeinen Formel II plus deren Carbonsäurederivate. Es kann aber auch ein Gemisch aus mehreren Carbonsäuresalzen der allgemeinen Formel II eingesetzt werden.
Treten bei den Silanen der allgemeinen Formel III beziehungsweise bei den Carbonsäuresalzen der allgemeinen Formel II Isomere auf, beispielsweise Konstitutions- oder Konfigurationsisomere, so hängt von deren Auswirkung auf die geplante Verwendung des Reaktions-produkts ab, ob keines, eines oder mehrere der Isomere bei der Reinheitsberechnung als Verunreinigung betrachtet werden oder nicht.

Das Verfahren wird vorzugsweise in Anwesenheit von Katalysatoren durchgeführt. Die Katalysatoren können beispielsweise Phasentransferkatalysatoren sein, insbesondere wenn das verwendete Lösungsmittel oder Lösungsmittelgemisch so unpolar ist, dass es bei 20 °C beim Mischungsversuch mit Wasser eine Mischungslücke, d.h. ein Mengenverhältnis von Wasser zu Lösungsmittel, in dem beide nicht vollständig homogen mischbar sind, aufweist.
Phasentransferkatalysatoren, die geeignet sind, um Reaktionen der Carboxylationen, wie sie die Carbonsäuresalze der allgemeinen Formel II aufweisen, zu bewirken, sind beispielsweise Salze, die - neben ihren Anionen - Kationen aufweisen, die Kohlenwasserstoffgruppen, vorzugsweise C₁-C₄₀ Kohlenwasserstoffgruppen, tragen. Weist das Kation des Katalysators mehrere Kohlenwasserstoffgruppen auf, so ist vorzugsweise mindestens eine dieser Gruppen eine C₂-C₄₀ Kohlenwasserstoffgruppe, bevorzugt ist mindestens eine dieser Gruppen eine C₄-C₄₀ Kohlenwasserstoffgruppe, besonders bevorzugt sind zwei, drei, vier oder mehr dieser Gruppen C₄-C₄₀ Kohlenwasserstoffgruppen.
Das Kation des Katalysators ist vorzugsweise ein Tetra(C₁-C₄₀-alkyl)ammonium-, Benzyltri(C₁-C₄₀-alkyl)ammonium-, (C₁-C₄₀-Alkyl)pyridinium- , Tetra (C₁-C₄₀-alkyl)guanidinium-, Hexa(C₁-C₄₀-alkyl)guanidinium-, Tetra (C₁-C₄₀-alkyl)phosphonium-, Benzyltri-(C₁-C₄₀-alkyl)phosphonium- oder ein Triphenyl (C₁-C₄₀-alkyl)phosphoniumion sowie ein Benzyltriphenylphosphoniumion, wobei die C₁-C₄₀-Alkylketten insgesamt unabhängig voneinander strukturell gleich oder verschieden sein können und die einzelnen C₁-C₄₀-Alkylketten eines Kations strukturell einheitlich oder Gemische mehrerer strukturell verschiedener Alkylketten sein können. Beispiele sind das Tetraethylammonium-, Tetrabutylammonium-, Tetrahexylammonium-, Tetraoctylammonium-, Trimethyltetradecylammonium-, Tributylmethylammonium-, Tributylhexadecylammonium-, Trioctylmethylammonium-, Trioctylpropylammonium-, Dimethyldioctadecylammonium-, Benzyltrimethylammonium-, Benzyltriethylammonium-, Benzyltributylammonium-, Benzyldimethyldodecylammonium-, Tetramethylguanidinium-, Hexaethylguanidinium-, Tetrabutylphosphonium-, Tetraoctylphosphonium-, Tri(isobutyl)-methylphosphonium-, Tributyltetradecylphosphonium-, Tributylhexadecylphosphonium-, Trihexyltetradecylphosphonium-, Trioctylethylphosphonium-, Benzyltributylphosphonium- und das Triphenylmethylphosphoniumion.
Das Anion des Katalysators ist vorzugsweise ein Halogenid-, Sulfat-, Hydrogensulfat-, Alkylsulfat-, Alkansulfonat-, Aromatensulfonat-, Carboxylat-, Hydrogencarbonat-, Carbonat-, Hydroxid-, Aryloxid- oder Alkoxidion,
bevorzugt ein Fluorid-, Chlorid-, Bromid-, Iodid-, Sulfat-, Hydrogensulfat-, Methylsulfat-, Laurylsulfat-, Methansulfonat-, Benzolsulfonat-, *p*-Toluolsulfonat-, Formiat-, Acetat-, Benzoat-, Hydrogencarbonat-, Carbonat- oder Hydroxidion,
besonders bevorzugt ein Chlorid-, Bromid-, Iodid-, Hydrogensulfat- oder Acetation.
Der Phasentransferkatalysator kann auch *in situ* erzeugt werden, indem eine Säure, beispielsweise eine Carbonsäure der Struktur R¹-C(=O)-OH, mit einer Base umgesetzt wird, so dass sich das entsprechende Säure-Base-Salz bildet, wobei die zu der Base korrespondierende Bronstedt-Säure, die sich dabei bildet, die für das Kation des Phasentransferkatalysators oben genannten Bedingungen erfüllt; geeignete Basen sind beispielsweise 1,8-Diazabicyclo[5.4.0]undec-7-en (DBU), 1,5-Diazabicyclo[4.3.0]-non-5-en (DBN), 1,4-Diazabicyclo[2.2.2]octan (DABCO), Trioctylamin, Tributylamin, Triethylamin, Ethyldiisopropylamin, Dicyclohexylamin, Hexylamin, Tetramethylguanidin. Der Phasentransferkatalysator kann ferner *in situ* erzeugt werden, indem ein Amin, ein Phosphin oder ein Sulfid eingesetzt wird, das mit der Gruppe X-R²- im Silan der allgemeinen Formel III reagieren kann, so dass sich durch Substitution von **X** das entsprechende Ammonium-, Phosphonium- oder Sulfoniumsalz bildet, das dann als Phasentransferkatalysator wirken kann. Für letztere Erzeugungsmethode des Phasentransferkatalysators *in situ* kann optional auch ein anderes Alkylierungsmittel als Silan der allgemeinen Formel III eingesetzt werden.

Die vorgenannten Phasentransferkatalysatoren bewirken einen Austausch von [M^{a+}] mit einem oder mehreren Kationen des Phasentransferkatalysators, so dass das resultierende neue Carbonsäuresalz, das als Kation das Kation des Phasentransferkatalysators aufweist, die reaktive Spezies darstellt; dieses neue Salz ist in der Regel besser im Reaktionsgemisch löslich als das ursprünglich eingesetzte Carbonsäuresalz. Als Phasentransferkatalysatoren können auch Kronenether, Kryptanden oder Coronanden eingesetzt werden wie beispielsweise 18-Krone-6 oder 15-Krone-4. Diese werden bevorzugt in Kombination mit Carbonsäuresalzen der allgemeinen Formel II eingesetzt, die als Kation ein Alkali- oder ein Erdalkalimetall, insbesondere Alkalimetall, aufweisen. Diese Phasentransferkatalysatoren können mit den Metallen Komplexe, wie beispielsweise 1:1- oder 1:2-Komplexe bilden, die zusammen mit dem Carboxylation eine verbesserte Löslichkeit aufweisen, so dass die Reaktion beschleunigt wird.
Bevorzugte Phasentransferkatalysatoren sind Tetrabutylphosphoniumchlorid, Tetrabutylphosphoniumbromid, Tetrabutylammoniumbromid, Tributylmethylammoniumchlorid, Methyltri(C₈-C₁₀-alkyl)-ammoniumchlorid, Dimethyldi(C₁₆-C₁₈-alkyl)ammoniumchlorid, Benzyltrimethylammoniumchlorid, Benzyltriethylammoniumchlorid, Trihexyltetradecylphosphoniumchlorid, Hexaethylguanidiniumchlorid und Hexaethylguanidiniumbromid. Die Phasentransferkatalysatoren sind beispielsweise unter den Handelsnamen Cyphos^{®} (Fa. Cytec), Aliquat^{®} (Fa. Cognis), Arquad^{®} (Fa. Akzo Nobel) oder Präpagen^{®} (Fa. Clariant) erhältlich, wie beispielsweise die Typen Cyphos^{®} IL164, Cyphos^{®} IL163, Cyphos^{®} IL101, Aliquat^{®} 100, Aliquat^{®} 134, Aliquat^{®} 336, Aliquat^{®} 175, Aliquat^{®} HTA-1, Ar-quad^{®} 2HT-75 oder Präpagen^{®} WK.

Die Katalysatoren können beispielsweise Aktivatoren für die Gruppe X im Silan der allgemeinen Formel III sein. Vorzugsweise werden hierfür Salze des Iodids oder des Bromids, besonders bevorzugt Salze des Iodids eingesetzt, wie beispielsweise Lithiumbromid, Lithiumiodid, Natriumbromid, Natriumiodid, Kaliumbromid oder Kaliumiodid. Diese Salze sind in der Lage, die Gruppe **X** durch ein Bromatom oder ein Iodatom zu ersetzen, so dass die resultierende (Bromalkyl)gruppe der Struktur Br-R²-bzw. die resultierende (Iodalkyl)gruppe der Struktur I-R²- am Siliciumatom eine besonders hohe Reaktivität gegenüber dem Carboxylation, wie es im Carbonsäuresalz der allgemeinen Formel II enthalten ist, aufweist.

Die Katalysatoren werden, bezogen auf die eingesetzte Stoffmenge des Silans der allgemeinen Formel III, vorzugsweise in Mengen von 0,01 bis 30 mol-%, bevorzugt von 0,1 bis 10 mol-%, insbesondere von 0,5 bis 5 mol-% eingesetzt. Werden mehrere Silane der allgemeinen Formel III eingesetzt, so beziehen sich diese Bereiche auf die Summe der Stoffmengen aller eingesetzten Silane der allgemeinen Formel III. Vorzugsweise weisen die Katalysatoren einen Wassergehalt von weniger als 10%, bevorzugt weniger als 1%, besonders bevorzugt weniger als 0,1% auf. Die Katalysatoren können während des Einsatzes oder vor dem Einsatz im erfindungsgemäßen Verfahren getrocknet werden, beispielsweise durch Azeotropieren mit einem wasserschleppenden Lösungsmittel, durch Ausheizen, durch Anlegen von Vakuum, durch Auslagerung über einem Trocknungsmittel, durch einen trockenen Gas- oder Flüssigkeitsstrom oder durch eine Kombination dieser Methoden.

Die Katalysatoren können einzeln oder als Gemisch aus zwei, drei oder mehr Katalysatoren eingesetzt werden. Die Katalysatoren können als diskrete Substanz oder als Lösung, beispielsweise in Wasser, Alkoholen wie Methanol, Ethanol, Propan-2-ol, Kohlenwasserstoffen, Ethern, Estern eingesetzt werden. Die Lösungsmittel, in dem die Katalysatoren gegebenenfalls gelöst sind, können vor, während oder nach der Ausführung des erfindungsgemäßen Verfahrens entfernt werden, beispielsweise durch Destillation. Die Lösungsmittel werden vorzugsweise vor der Ausführung des erfindungsgemäßen Verfahrens entfernt, wenn sie die Reaktion stören, beispielweise wenn das Lösungsmittel des Phasentransferkatalysators Wasser enthält und das Silan der allgemeinen Formel III hydrolysierbare Gruppen R³ aufweist, oder wenn das Lösungsmittel des Phasentransferkatalysators einen ähnlichen Siedepunkt wie das Silan der allgemeinen Formel I aufweist, d.h. insbesondere wenn sein Siedepunkt weniger als 40 K über oder unter dem Siedepunkt des Silans der allgemeinen. Formel I liegt, gemessen bei dem Druck, bei dem der destillative Verfahrensschritt ausgeführt wird.

Vorzugsweise weisen eingesetzte Lösungsmittel einen Siedepunkt auf, der vom Siedepunkt des Silans der allgemeinen Formel I so stark abweicht, dass eine einfache destillative Trennung möglich ist.

Die Lösungsmittel bzw. die Lösungsmittelgemische, die bei dem Verfahren eingesetzt werden können, sind dadurch gekennzeichnet, dass sie mindestens ein hochsiedendes Lösungsmittel "HS-LM" enthalten bzw. aufweisen, das gemessen bei dem Druck, bei dem der oben bezeichnete destillative Verfahrensschritt durchgeführt wird, bei dem das Destillat mindestens ein Silan der allgemeinen Formel I enthält, einen höheren Siedepunkt aufweist als das Silan der allgemeinen Formel I (im Folgenden als "Sie-depunktbedingung" bezeichnet). Vorzugsweise weist mindestens ein Lösungsmittelbestandteil, der diesem Kriterium entspricht, einen Siedepunkt auf, der, gemessen bei dem Druck, bei dem der oben bezeichnete destillative Verfahrensschritt durchgeführt wird, um mindestens 10 K höher ist als der Siedepunkt des Silans der allgemeinen Formel I, bevorzugt mindestens 20 K höher, besonders bevorzugt mindestens 30 K höher. Sind mehrere Lösungsmittel in dem Gemisch vorhanden, die den Bedingungen für **HS-LM** genügen, so ist daraus der Anteil aller **HS-LM** in Summe, die weniger als 10 K höher sieden als das Silan der Formel I, vorzugsweise geringer als 10%, bevorzugt weniger als 5%, besonders bevorzugt weniger als 1%; der Anteil aller **HS-LM** in Summe, die weniger als 20 K höher sieden als das Silan der allgemeinen Formel I, vorzugsweise geringer als 20%, bevorzugt weniger als 10%, besonders bevorzugt weniger als 2%; der Anteil aller **HS-LM** in Summe, die weniger als 30 K höher sieden als das Silan der allgemeinen Formel I, vorzugsweise geringer als 40%, bevorzugt weniger als 20%, besonders bevorzugt weniger als 5%, jeweils in Gewichts-% bezogen auf die Summe aller eingesetzten **HS-LM,** wobei die Siedepunkte bei dem Druck gemessen werden, bei dem der oben bezeichnete destillative Verfahrensschritt ausgeführt wird. Der Anteil an Lösungsmitteln, die den Kriterien für **HS-LM** entsprechen, bezogen in Gewichts-% auf die Summe aller im Verfahren eingesetzten Lösungsmittel, beträgt im Verfahren vorzugsweise mindestens 20%, bevorzugt mindestens 50%, besonders bevorzugt mindestens 80%. Vorzugsweise werden bei dem Verfahren keine Lösungsmittel eingesetzt, die weniger als 10 K höher sieden als das Silan der allgemeinen Formel I, bevorzugt keine Lösungsmittel, die weniger als 20 K höher sieden als das Silan der allgemeinen Formel I, besonders bevorzugt keine Lösungsmittel, die weniger als 30 K höher sieden als das Silan der allgemeinen Formel I, wobei die Siedepunkte bei dem Druck gemessen werden, bei dem der oben bezeichnete destillative Verfahrensschritt ausgeführt wird. Enthält ein Lösungsmittelgemisch einen unerwünscht hohen Anteil an Bestandteilen, deren Siedepunkt unerwünscht nahe am Siedepunkt des Silans der allgemeinen Formel I liegt, so kann das Lösungsmittelgemisch vor der Verwendung angestrippt werden, d.h. ein niedrig siedender Schnitt wird abgetrennt und der höher siedende Schnitt oder der zurückbleibende Sumpf, bestehend aus oder enthaltend **HS-LM,** wird als Lösungsmittel im erfindungsgemäßen Verfahren eingesetzt.

Die eingesetzten Lösungsmittel, insbesondere diejenigen, die der Siedepunktbedingung für **HS-LM** genügen, sind vorzugsweise unter den Bedingungen der Reaktion und des destillativen Verfahrensschritts gegenüber den beteiligten Reaktanden, Katalysatoren, Produkten und gegebenenfalls weiteren Zusätzen inert oder werden durch die Reaktanden oder optional durch andere Komponenten in inerte Verbindungen überführt; bevorzugt sind sie inert.
Beispiele für inerte Verbindungsklassen, die als Lösungsmittel (beispielsweise als **HS-LM,** wenn sie die Siedepunktbedingung erfüllen) vorzugsweise eingesetzt werden können, sind gesättigte oder olefinisch oder aromatisch ungesättigte, lineare oder verzweigte, acyclische oder cyclische oder oligocyclische oder cyclische Gruppen aufweisende Kohlenwasserstoffe, Ether, Carbonsäureester, Amide wie Carbon- oder Phosphorsäureamide, Carbamate, Sulfoxide, Sulfone, Harnstoffe, Lactone, Lactame, N-Alkyllactame, ionische Lösungsmittel, alkyl- oder arylterminierte Siliconöle wie beispielsweise trimethylsilyl-terminierte Siliconöle; unter den genannten Lösungsmitteln bevorzugt sind lineare oder.verzweigte, acyclische oder cyclische, gesättigte oder aromatisch ungestättigte Kohlenwasserstoffe, Ether, Carbonsäureester, Amide, Sulfoxide, Sulfone, Harnstoffe, ionische Lösungsmittel oder alkyl- oder arylterminierte Siliconöle. Besonders bevorzugt sind lineare oder verzweigte, acyclische oder cyclische, gesättigte oder aromatisch ungestättigte Kohlenwasserstoffe oder alkylsilylterminierte Siliconöle.
Beispiele für bevorzugte Lösungsmittel, die (beispielsweise als **HS-LM,** wenn sie die Siedepunktbedingung erfüllen) eingesetzt werden können, sind die Isomere, insbesondere die *n*-Isomere, von Decan, Undecan, Dodecan, Tridecan, Tetradecan, Pentadecan, Hexadecan, Heptadecan, Octadecan, Nonadecan, Eicosan, Heneicosan, Docosan, Tricosan, Tetracosan, Pentacosan, Hexacosan, Heptacosan, Octacosan, Nonacosan, Triacontan, C₃₁-C₁₀₀ Kohlenwasserstoffe, Kohlenwassrstoffgemische wie Paraffine, Lösungsmittel der White Spirit-, Low Aromatic White Spirit-, High Aromatic White Spirit-, High Flash White Spirit-, Kristalloel-, SBP-, Shellsol^{®}- oder der Sarasol^{®}-Serie der Firma Shell (beispielsweise Shellsol^{®} D40, D43, D60, DSC, D70, D80, D90, D100, D100S, D120, A100, A150, A150ND, TC, TD, OMS, T, TK, TM, B HT, 7 EC, 15, 16, H, 2325, 2046, 1495; Sarasol^{®} 40, 75, 85, 120; SBP 140/165), Lösungsmittel der Hydroseal-, Isane-, Ketrul^{®}-, Kerdane^{®}-, Spirdane^{®}- oder Solvarex^{®}-Serie der Firma Total (beispielsweise Hydroseal G400H, G340H, G3H, G250H, G240H, G232H; Ketrul D100, 220, 212, 211, D85, D80, D75, D70, HT; Spirdane D66, K2, D60L, D60, D40K, D40, HT, D30, L1, D25; Isane IP185, IP175, IP165, IP155, IP130; Solvarex 9, 10, 10LN), Wärmeträgeröle (beispielsweise Marlotherm^{®} SH, Fa. AVIA), Weichmacheröle (beispielsweise Exarol^{®}-, Plaxene^{®}- oder Plaxolene^{®}-Serie der Fa. Total), Wachse, *N,N*-Dimethylformamid, *N*-Methylformamid, Formamid, Dimethylsulfoxid, *N*-Methylpyrrolidon, Dimethylpropylenharnstoff (1,3-Dimethyl-3,4,5,6-Tetrahydro-2(*1H*)-pyrimidinon), Tetramethylharnstoff, Harnstoff, α,ω-bis(trimethylsilyl)terminierte Poly(dimethylsiloxane) wie beispielsweise die Siliconöle AK 35, AK 50, AK 100, AK 200, AK 350, AK 1000, AK 10000, AK 12500, AKF 1000, AKF 10000 (alle Wacker Chemie AG), Poly(dimethylsiloxan-co-methylphenylsiloxan) wie beispielsweise AP 100, AP 200, AP 1000, AS 100, AR 200 (alle Wacker Chemie AG), funktionelle Siliconöle wie Wacker L 051 Siliconöl, ADVALON^{®} PN 100, FA 33, PS 500 (alle Wacker Chemie AG), Ethylenglykoldibutylether, Diethylenglykoldimethylether, Diethylenglykoldibutylether, Triethylenglykoldimethylether, Triethylenglykoldibutylether, Tetraethylenglykoldimethylether, Dialkylether wie Dibutylether, Dioctylether, Diphenylether, Dibenzylether, an beiden Kettenenden ether- oder esterterminierte oder gemischt ether- und esterterminierte Polyethylenglykole, Polypropylenglykole oder Polyethylenglykol-polypropylenglykol-Copolymere, Ester von C₄-C₃₀ Fettsäuren oder Diester von C₄-C₃₀ Dicarbonsäuren, insbesondere von C₈-C₂₂ Fettsäuren oder C₈-C₂₂ Dicarbonsäuren, beispielsweise die Methyl-, Ethyl-, *n*-Propyl-, *iso*-Propyl-, *n*-Butyl-, sec-Butyl-, *iso*-Butyl-, *tert*-Butyl-, *n-*Pentyl-, *n*-Hexyl-, *n*-Heptyl-, *n*-Octyl-, Phenyl-, Benzyl- oder C₈-C₂₂-Alkylester von Butan-, Hexan-, Octan-, Decan-, Dodecan-, Tetradecan-, Hexadecan-, Octadecan-, Eicosan-, Docosan-, Bernstein-, Adipin- oder Korksäure, Triester des Glycerins wie beispielsweise Glycerintriacetat oder Glycerintributyrat, oder Diester der Phthalsäure wie beispielsweise Phthalsäuredibutylester, Phthalsäuredioctylester, Phthalsäuredinonylester oder Phthalsäuredi-*iso*-nonylester; unter den genannten Lösungsmitteln gehören die Kohlenwasserstoffe und die Siliconöle zu den besonders bevorzugten Lösungsmitteln. Weitere Lösungsmittel finden sich in Directory of Solvents, (B.P. Whim, P.G. Johnson, Herausgeber), First Edition 1996, Blackie Academic & Professional (Chapman & Hall, London, Weinheim, New York, Tokyo, Melbourne, Madras), ISBN 0-7514-0245-1.

Die eingesetzten Lösungsmittel, auch diejenigen, die der Siedepunktbedingung für **HS-LM** genügen, müssen nicht zwangsläufig unter den Bedingungen der Reaktion und des destillativen Verfahrensschritts gegenüber den beteiligten Reaktanden, Katalysatoren, Produkten und gegebenenfalls weiteren Zusätzen inert sein.

Beispiele für nicht inerte Lösungsmittel, die dennoch in dem Verfahren einsetzbar sein können, sind beispielsweise Verbindungen mit Alkohol-, Silanol- oder Carbonsäurefunktionen. So können Alkohole, wenn mindestens eine der Gruppen R³ im Silan der allgemeinen Formel I bzw. der allgemeinen Formel III für eine hydrolysierbare Gruppe steht, beispielsweise mit dem Silan unter einem Austausch von **R³** gegen den dem Alkohol entsprechenden Alkoxyrest reagieren, wobei R³-H freigesetzt wird. Carbonsäuren können beispielsweise, wenn mindestens einer der Reste **R³** für einen Alkoxyrest steht, mit diesem Alkoxyrest unter Bildung des entsprechenden Carbonsäureesters und Siloxans reagieren, oder sie können mit der Carbonsäure der allgemeinen Formel II eine Protonenübertragung eingehen. Siliconöle, die Silanolgruppen aufweisen, können, wenn mindestens einer der Reste **R³** für einen hydrolysierbaren Rest steht, mit den Silanen der allgemeinen Formel I oder der allgemeinen Formel III reagieren und die entsprechenden silanterminierten Siliconöle bilden, wobei R³-H freigesetzt wird. Protische Verbindungen können das Carbonsäuresalz solvatisieren und die Reaktionsgeschwindigkeit beeinflussen; stellt sich in einem Vorversuch heraus, dass ein protisches Lösungsmittel die Reaktionsgeschwindigkeit negativ beeinflusst, d.h. die Reaktion bremst, so wird es vorzugsweise durch ein anderes Lösungsmittel ersetzt. Werden nicht inerte Lösungsmittel eingesetzt, so werden die Anzahl der reaktiven Gruppen im nicht-inerten Lösungsmittel und in den Silanen der allgemeinen Formeln I und III vorzugsweise so bemessen, dass, beispielsweise durch die oben beschriebenen Reaktionen, vorzugsweise keine Vernetzung eintritt. Durch die Reaktionen der nicht-inerten Lösungsmittel können sich die Siedepunkte dieser Lösungsmittel verändern, so dass gegebenenfalls Lösungsmittel, die der Siedepunktbedingung für **HS-LM** genügen, *in situ* hergestellt werden können. Die nicht-inerten Lösungsmittel können durch Reaktion mit anderen Komponenten, die im Verfahren auftreten, gegebenenfalls in inerte Lösungsmittel überführt werden. Beispielsweise können Lösungsmittel, die Alkohol- oder Silanolfunktionen aufweisen, durch Silane der allgemeinen Formeln I oder III, wenn diese hydrolysierbare Gruppen **R³** aufweisen, silyliert werden (in der Regel unter Abspaltung von R³-H), so dass die silylierte Alkohol- oder Silanolfunktion im Lösungsmittel unter den Reaktionsbedingungen inert ist. Ist die Konzentration an funktionellen Gruppen im Lösungsmittel gering, beispielsweise in Polyethylenglykolen, Polypropylenglykolen, Poly(ethylenglykol-co-propylenglykol)en, monoalkylierten oder monoveresterten Glykolen oder Oligoethylenglykolen (beispielsweise Brij 35, 52, 56, 72, 76, 92 V, 93, 96 V, 97, 98, 78 P, 58, 700) oder in silanolfunktionellen Siliconölen, so kann das Ausmaß an Silanen der allgemeinen Formeln I bzw. III, die durch Reaktion hydrolysierbarer Gruppen **R³** mit solchen Lösungsmitteln verloren gehen, gering und damit tolerierbar sein. In der Regel werden die Lösungsmittel recycelt, so dass, wenn im Verfahren ursprünglich nicht-inerte Lösungsmittel in inerte Lösungsmittel überführt wurden, die so erzeugten recycelten Lösungsmittel als inerte Lösungsmittel eingesetzt werden können.

Ferner können beispielsweise Triester der Phosphorsäure, wie Tributylphosphat.oder Trioctylphosphat, oder Diester von Phosphonsäuren, als Lösungsmittel, beispielsweise als **HS-LM,** eingesetzt werden, wobei diese Lösungsmittel, je nach den angewendeten Bedingungen der Reaktionsführung und des destillativen Verfahrensschritts, Estergruppen bzw. Aloxygruppen mit den Silanen der allgemeinen Formel I bzw. Alkoxygruppen mit den Silanen der allgemeinen Formel III austauschen können.

Eingesetzte Lösungsmittel können auch als Phasenvermittler wirken, beispielsweise indem sie die Löslichkeit von Katalysatoren, Carbonsäuresalzen der allgemeinen Formel II, Silan der allgemeinen Formeln I oder III ineinander oder in anderen eingesetzten Lösungsmitteln erhöhen. Hierfür können beispielsweise lineare Polyether, wie beispielsweise Polyethylenglykole oder Polypropylenglykole oder deren Copolymere, an einem oder an beiden Kettenenden ester- oder etherterminierte Polyethylenglykole oder Polypropylenglykole wie beispielsweise Polyethylenglykol-dimethylether, Ethylenglykol-dimethylether oder - dibutylether, Diethylenglykol-dimethylether oder -dibutylether, Triethylenglykol-dimethylether oder Tetraethylenglykol-dimethylether geeignet sein. Soll eine Löslichkeitserhöhung des Carbonsäuresalzes der allgemeinen Formel II erzielt werden, so werden hierbei vorzugsweise Temperaturen über 80 °C, bevorzugt über 120 °C., besonders bevorzugt über 160 °C angewendet.

Die eingesetzten Lösungsmittel können halogeniert, beispielsweise chloriert, sein. Vorzugsweise verhalten sich die halogenierten Lösungsmittel gegenüber den Edukten unter den Bedingungen des Verfahrens unreaktiv, bevorzugt verhält sich die Halogenfunktion halogenierter Lösungsmittel gegenüber dem Carboxylat im Carbonsäuresalz der allgemeinen Formel II unter den Bedingungen des Verfahrens unreaktiv. Vorzugsweise ist ein Anteil von weniger als 50%, bevorzugt weniger als 20%, insbesondere weniger als 5% der eingesetzten Lösungsmittel halogeniert, bezogen auf die Summe aller eingesetzten Lösungsmittel. In einer besonders bevorzugten Ausführungsform werden keine halogenierten Lösungsmittel in dem Verfahren eingesetzt.

Die Lösungsmittel müssen bei Raumtemperatur nicht flüssig sein, um eine erfolgreiche Verwendung im erfindungsgemäßen Verfahren zu gewährleisten. So sind beispielsweise Paraffine, die Schmelzpunkte um ca. 70 °C aufweisen können, durchaus einsetzbar, beispielsweise als **HS-LM,** wenn sie der Siedepunktbedingung genügen. Auch höher schmelzende Lösungsmittel sind als Lösungsmittel und, wenn sie der Siedepunktbedingung genügen, auch als **HS-LM** einsetzbar, sie müssen lediglich unter den Bedingungen des destillativen Verfahrensschritts flüssig werden, wenn sie als **HS-LM** eingesetzt werden sollen. Aus praktischen Gründen (Aufschmelzen und Beheizen von Leitungen entfällt oder wird erleichtert) weisen die Lösungsmittel bzw. Lösungsmittelgemische vorzugsweise Schmelzpunkte bzw. Schmelzbereiche unterhalb von 30 °C, bevorzugt unter 20 °C, besonders bevorzugt unter 10 °C auf. Hochschmelzende Lösungsmittel oder -gemische können beispielsweise durch Abmischen mit anderen Lösungsmitteln oder - gemischen in niedriger schmelzende Lösungsmittelgemische, beispielsweise in eutektische Gemische, überführt werden.

Die Lösungsmittel können alleine eingesetzt werden oder es können zwei, drei oder mehrere Lösungsmittel, von denen eines, zwei, drei oder mehrere der für **HS-LM** geltenden Siedepunktbedingung genügt, in dem Verfahren eingesetzt werden. Es können in dem Verfahren auch optional zusätzlich Lösungsmittel zugesetzt werden, die der Siedepunktbedingung nicht genügen, d.h. die unter den Bedingungen des destillativen Verfahrensschritts einen Siedepunkt gleich oder unter dem des Silans der allgemeinen Formel I aufweisen. Solche Lösungsmittel werden im destillativen Verfahrensschritt, je nach Trennleistung, Lage der Siedepunkte und Auftreten etwaiger Azeotrope, vor oder mit der Fraktion, die Silan der allgemeinen Formel I enthält, überdestilliert. Vorzugsweise wird in dem Verfahren weniger als 80%, bevorzugt weniger als 50%, insbesondere weniger als 20% an Lösungsmitteln eingesetzt, die im destillativen Verfahrensschritt einen Siedepunkt gleich oder unter dem des Silans der allgemeinen Formel I aufweisen, berechnet in Gewichts-% bezogen auf die Summe aller im Verfahren eingesetzter Lösungsmittel, wobei die Siedepunkte bei dem Druck gemessen werden, bei dem der destillative Verfahrensschritt ausgeführt wird, bei dem das Destillat mindestens ein Silan der allgemeinen Formel I enthält. Bevorzugt wird im Verfahren kein Lösungsmittel eingesetzt, dessen Siedepunkt gleich oder unter dem des Silans der allgemeinen Formel I liegt, insbesondere keine Lösungsmittel, die einen Siedepunkt gleich dem des Silans der Formel I aufweisen, wobei die Siede¬punkte bei dem Druck gemessen werden, bei dem der oben bezeichnete destillative Verfahrens¬schritt ausgeführt wird.
Mindestens ein Lösungsmittel, das der oben definierten Siedepunktbedingung für **HS-LM** genügt, wird bei dem Verfahren in mindestens einem Verfahrensschritt, gegebenenfalls auch in mehreren Verfahrensschritten, spätestens jedoch im Verlauf des destillativen Verfahrensschritts, der weiter unten beschrieben wird, zugegeben; es kann auch zu einem früheren Zeitpunkt des Verfahrens zugegeben werden.

Vorzugsweise werden bei dem Verfahren weniger als 10% Lösungsmittel zugesetzt, die mit dem Silan der allgemeinen Formel I einen binären Azeotrop oder zusammen mit dem Silan der allgemeinen Formel I und weiteren Substanzen im Gemisch einen ternären, quaternären oder höheren Azeotrop bilden, bevorzugt weniger als 1%, besonders bevorzugt weniger als 0,1%, in Gewichts-% bezogen auf die theoretische Ausbeute an Silan der allgemeinen Formel I. In einer besonders bevorzugten Ausführungsform werden keine Lösungsmittel zugegeben, die derartige Azeotrope bilden. Vorzugsweise ist der Anteil derjenigen Lösungsmittel in Summe, die weniger als 10 K niedriger sieden als das Silan der allgemeinen Formel I, vorzugsweise geringer als 10%, bevorzugt weniger als 5%, besonders bevorzugt weniger als 1%; der Anteil derjenigen Lösungsmittel in Summe, die weniger als 20 K niedriger sieden als das Silan der allgemeinen Formel I, vorzugsweise geringer als 20%, bevorzugt weniger als 10%, besonders bevorzugt weniger als 2%; der Anteil derjenigen Lösungsmittel in Summe, die weniger als 30 K niedriger sieden als das Silan der allgemeinen Formel I, vorzugsweise geringer als 40%, bevorzugt weniger als 20%, besonders bevorzugt weniger als 5%, bezogen auf die Summe aller eingesetzten Lösungsmittel, wobei die Siedepunkte bei dem Druck gemessen werden, bei dem der oben bezeichnete destillative Verfahrensschritt ausgeführt wird. Vorzugsweise werden bei dem Verfahren keine Lösungsmittel eingesetzt, die weniger als 10 K niedriger sieden als das Silan der allgemeinen Formel I, bevorzugt keine Lösungsmittel, die weniger als 20 K niedriger sieden als das Silan der allgemeinen Formel I, besonders bevorzugt keine Lösungsmittel, die weniger als 30 K niedriger sieden als das Silan der allgemeinen Formel I, wobei die Siedepunkte bei dem Druck gemessen werden, bei dem der oben bezeichnete destillative Verfahrensschritt ausgeführt wird.

Lösungsmittelgemische können sich anders verhalten als reine Lösungsmittel. Ebenso kann die Anwesenheit der Reaktionskomponenten des Verfahrens, beispielsweise Silane der allgemeinen Formeln I oder III, das Siedeverhalten der verwendeten Lösungsmittel beeinflussen und umgekehrt. So ist beispielsweise die Bildung etwaiger Azeotrope schwer vorhersagbar. Welche Lösungsmittel allein oder im Gemisch als Hochsieder-Lösungsmittel HS-LM geeignet sind, können Fachleute jedoch leicht durch geeignete Vorversuche ermitteln, beispielsweise indem man das Gemisch der im Verfahren auszuführenden Reaktion (Formeln II + III --> I) mit den gewünschten Lösungsmitteln versetzt und das Siedeverhalten im Gemisch testet. Hierfür wird sinnvollerweise zunächst der Siedepunkt des Silans der allgemeinen Formel I bei dem Druck ermittelt, bei dem später der destillative Verfahrensschritt ausgeführt werden soll. Für den Test des Siedeverhaltens wird mindestens ein Lösungsmittel zum Testgemisch gegeben, das, bezogen auf seinen Siedepunkt als Reinstoff bei diesem Druck, einen höheren Siedepunkt aufweist als das Silan der allgemeinen Formel I (d.h. ein Lösungsmittel, das die Siedepunktbedingung für **HS-LM** erfüllt). Soweit nicht anders angegeben, wird als Druck ein Druck von 100 mbar, 20 mbar oder von 1 mbar angewendet. Werden besonders bevorzugte Lösungsmittel als **HS-LM** eingesetzt, die bei dem Druck des destillativen Verfahrensschritts einen deutlich höheren Siedepunkt als das Silan der allgemeinen Formel I aufweisen (Siedepunktdifferenz mindestens 30 K), so können die Vorversuche in der Regel entfallen.

Vorzugsweise weisen in dem Verfahren eingesetzte Lösungsmittel einen Wassergehalt von weniger als 10000 ppm, bevorzugt weniger als 1000 ppm, besonders bevorzugt weniger als 100 ppm auf. Eingesetzte Lösungsmittel können während des Einsatzes oder vorzugsweise vor dem Einsatz im erfindungsgemäßen Verfahren getrocknet werden, beispielsweise durch Azeotropieren mit einem anderen wasserschleppenden Lösungsmittel, durch Azeotropieren, wenn das Lösungsmittel selbst als Wasserschlepper wirkt, durch Anstrippen oder Andestillieren, durch Ausheizen, durch Anlegen von Vakuum, durch Auslagerung über oder Destillation von einem Trocknungsmittel oder durch eine Kombination dieser Methoden.

Vorzugsweise werden die Hochsieder-Lösungsmittel **HS-LM,** die der Siedepunktbedingung genügen, in Summe in einer Menge eingesetzt, die zwischen dem zwanzigsten Teil und dem Zwanzigfachen der Masse der eingesetzten Silane der allgemeinen Formel III in Summe entsprechen, bevorzugt zwischen dem zehnten Teil und dem Fünffachen, besonders bevorzugt zwischen dem fünften Teil und dem Doppelten.

Vorzugsweise werden bei dem Verfahren Lösungsmittel eingesetzt, die nicht als gesundheitsschädlich, giftig, sehr giftig, krebserregend, mutagen, reproduktionstoxisch, geruchsbelästigend, reizend oder ätzend eingestuft werden.

Die im Verfahren eingesetzten Lösungsmittel, insbesondere die Hochsieder-Lösungsmittel **HS-LM,** die der Siedepunktbedingung genügen, können mit einem oder mehreren der Edukte und Produkte und Katalysatoren und miteinander nicht, teilweise oder vollständig mischbar beziehungsweise nicht, teilweise oder vollständig ineinander löslich sein. Für den Verfahrenserfolg ist in der Regel ausreichend, dass zumindest ein Anteil des Carboxylats aus dem Carbonsäuresalz der allgemeinen Formel II mit zumindest einem Anteil des Silans der allgemeinen Formel III an einer Phasengrenze oder vorzugsweise innerhalb einer homogenen Phase miteinander in Kontakt kommen. Über dynamische Phasengleichgewichte können die Edukte auch dann nach und nach vollständig abreagieren, wenn zu einem einzelnen Zeitpunkt nur Anteile miteinander in Kontakt kommen.

Das Verfahren wird vorzugsweise unter inerter Atmosphäre, vorzugsweise unter einer Argon- oder Stickstoffatmosphäre, ausgeführt. Die Atmosphäre enthält vorzugsweise weniger als 10000 ppm, bevorzugt weniger als 1000 ppm, besonders bevorzugt weniger als 100 ppm Wasser. Die Atmosphäre enthält vorzugsweise weniger als 10000 ppm, bevorzugt weniger als 1000 ppm, besonders bevorzugt weniger als 100 ppm Sauerstoff.

Die Reaktion des Carbonsäuresalzes der allgemeinen Formel II mit dem Silan der allgemeinen Formel III kann unter Kühlung, bei Umgebungstemperatur oder bei erhöhter Temperatur ausgeführt werden, vorzugsweise bei mindestens 0 °C, bevorzugt mindestens 30 °C, besonders bevorzugt mindestens 50 °C und vorzugsweise bei höchstens 300 °C, bevorzugt höchstens 250 °C, besonders bevorzugt höchstens 200 °C.
Die Kühlung kann beispielsweise durch Mantel-, Rührer- oder Siedekühlung erfolgen, Heizung beispielsweise durch Manteloder Rührerheizung, die Wärmeübetragung kann beispielsweise elektrisch, mit Sole, Öl, Wasser, gegebenenfalls überspanntem Dampf oder durch Scherung/Reibung erfolgen.
Die Reaktion kann in der Regel bei atmosphärischem Druck ± 50 kPa ausgeführt werden; vorzugsweise wird die Reaktion bei 0,1 Pa bis 100 MPa, bevorzugt bei 100 Pa bis 10 MPa, besonders bevorzugt bei 10 kPa bis 1 MPa ausgeführt. Die Reaktion kann beispielsweise als Batchreaktion, diskontinuierlich, kontinuierlich, kaskadierend, in Verweilzeitreaktoren, Verweilzeitrohren oder in Mischern (beispielsweise dynamisch oder statisch) ausgeführt werden.

Die Reaktion kann ohne Lösungsmittel oder in Gegenwart eines oder mehrerer Lösungsmittel ausgeführt werden. Die Lösungsmittel können beispielsweise den Kriterien für **HS-LM** entsprechen. Vorzugsweise weisen eingesetzte Lösungsmittel einen Wassergehalt von weniger als 10000 ppm, bevorzugt weniger als 1000 ppm, besonders bevorzugt weniger als 100 ppm auf.

Das Reaktionsgemisch wird vorzugsweise durchmischt, beispielsweise durch Konvektion oder Rührung. Die Reaktion kann in einoder mehrphasigen Gemischen, beispielsweise in ein-, zwei- oder dreiphasigen Gemischen, beispielsweise fest/flüssig, gasförmig/flüssig, flüssig/flüssig, fest/flüssig/flüssig ausgeführt werden. So kann beispielsweise ein Lösungsmittel eine flüssige Phase, die gegebenenfalls gelöste Anteile der Reaktanden enthält, ein Katalysator/Silan-Gemisch eine zweite flüssige Phase, die gelöste Anteile des Carbonsäuresalzes der allgemeinen Formel II enthält und gegebenenfalls Lösungsmittel enthält, und das Carbonsäuresalz eine dritte - beispielsweise feste - Phase bilden.

Die Reihenfolge der Zugabe von Carbonsäuresalzes der allgemeinen Formel II, Silan der allgemeinen Formel III, gegebenenfalls Katalysatoren, Lösungsmittel, gegebenenfalls Stabilisatoren ist prinzipiell beliebig und wird durch praktische Aspekte bestimmt, die Fachleute durch orientierende Versuche ermitteln können. Beispielsweise können alle Komponenten vorgelegt und aufgeheizt werden, oder eine oder mehrere Komponenten werden vorgelegt und die übrigen zudosiert, oder alle Komponenten werden gleichzeitig zudosiert und durchmischt, beispielsweise portionsweise oder kontinuierlich.
In einer bevorzugten ersten Ausführungsform wird mindestens ein Carbonsäuresalz der allgemeinen Formel II vorgelegt und mindestens ein Silan der allgemeinen Formel III wird, gegebenenfalls in der Wärme, zudosiert.
In einer bevorzugten zweiten Ausführungsform wird mindestens ein Silan der allgemeinen Formel III vorgelegt und mindestens ein Carbonsäuresalz der allgemeinen Formel II wird, gegebenenfalls in der Wärme, zudosiert.
In einer bevorzugten dritten Ausführungsform verfährt man wie in der ersten oder zweiten Ausführungsform und legt zusätzlich mindestens einen Katalysator vor.
In einer bevorzugten vierten Ausführungsform verfährt man wie in der ersten oder zweiten Ausführungsform und dosiert zusätzlich mindestens einen Katalysator zu.
In einer bevorzugten fünften Ausführungsform verfährt man wie in der ersten, zweiten, dritten oder vierten Ausführungsform und legt zusätzlich mindestens ein Lösungsmittel, das bevorzugt den Kriterien für **HS-LM** entspricht, vor.
In einer bevorzugten sechsten Ausführungsform verfährt man wie in der ersten, zweiten, dritten oder vierten Ausführungsform und dosiert zusätzlich mindestens ein Lösungsmittel, das bevorzugt den Kriterien für **HS-LM** entspricht, zu.

Vorzugsweise wird die Reaktion so ausgeführt, dass das Silan der allgemeinen Formel III annähernd oder exakt stöchiometrisch bezogen auf die Stoffmenge an Carboxylatanionen im Carbonsäuresalz der allgemeinen Formel II eingesetzt wird. Weist das Silan der allgemeinen Formel III mehrere substituierbare Abgangsgruppen **X** auf, oder werden mehrere unterschiedliche Silane der allgemeinen Formel III eingesetzt, so wird diese Stöchiometrie in der Regel auf die Summe der Abgangsgruppen **X** berechnet. Werden mehrere unterschiedliche Carbonsäuresalze der allgemeinen Formel II eingesetzt, so wird diese Stöchiometrie in der Regel auf die Summe der Carboxylationen berechnet. Annähernd stöchiometrisch bedeutet, dass das Stoffmengenverhältnis von Gruppen **X** in den Silanen der allgemeinen Formel II zu Carboxylationen in den Carbonsäuresalzen der allgemeinen Formel III vorzugsweise in einem Verhältnis von 2,0 : 1,0 bis 1,0 : 2,0, bevorzugt 1,5 : 1,0 bis 1,0 : 1,5, besonders bevorzugt 1,2 : 1,0 bis 1,0 : 1,2 eingesetzt wird. In einer besonders bevorzugten Ausführungsform beträgt dieses Verhältnis 1,0 : 1,0. Vorzugsweise wird die Reaktion so geführt, dass mindestens 80%, bevorzugt mindestens 90%, insbesondere mindestens 95% der eingesetzten Carbonsäuresalze der allgemeinen Formel II oder der eingesetzten Silane der allgemeinen Formel II umgesetzt werden, wobei sich diese Prozentangaben auf das im Unterschuss eingesetzte Edukt beziehen, wenn die Carbonsäuresalze der allgemeinen Formel II nicht exakt im stöchiometrischen Verhältnis zu den Silanen der allgemeinen Formel II (d.h. nicht im o.g. Verhältnis 1,0 : 1,0) eingesetzt wurden. Der Umsatz kann durch längere Reaktionszeit, den Zusatz von Katalysatoren oder durch höhere Temperaturen erhöht bzw. beschleunigt werden.

Weist das Silane der allgemeinen Formel III mehrere substituierbare Abgangsgruppen **X** auf, oder werden mehrere unterschiedliche Silane der allgemeinen Formel III eingesetzt, die Abgangsgruppen X aufweisen, und weisen Dabei Abgangsgruppen **X** unterschiedliche Reaktivitäten auf, so können die Carbonsäuresalze der allgemeinen Formel II auch beispielsweise in einer Menge eingesetzt werden, die nur der Summe der reaktivsten (nicht aller) Gruppen **X** entspricht, so dass eine gezielte Teilsubstitution der Abgangsgruppen **X** im Silan möglich wird. In einer anderen Ausführungsform kann eine Substitution aller Abgangsgruppen **X** durch Einsatz einer mindestens entsprechenden Stoffmenge an Carbonsäuresalz der allgemeinen Formel II erzielt werden.

Weist das Carbonsäuresalz der allgemeinen Formel II mehrere unterschiedliche Carboxylationen auf, oder werden mehrere unterschiedliche Carbonsäuresalze der allgemeinen Formel II eingesetzt, und weisen dabei Carboxylationen unterschiedliche Reaktivitäten auf, so können die Silane der allgemeinen Formel III auch beispielsweise in einer Menge eingesetzt werden, so dass die in ihnen enthaltenen Abgangsgruppen **X** der , Summe der reaktivsten (nicht aller) Carboxylationen entsprechen, so dass eine gezielte Teilumsetzung der reaktivsten Carboxylationen möglich wird. In einer anderen Ausführungsform kann eine Reaktion aller Carboxylationen durch Einsatz einer mindestens entsprechenden Stoffmenge an Silane der allgemeinen Formel III erzielt werden.

Während der Reaktion kann gleichzeitig eine Destillation erfolgen. Dadurch kann beispielsweise ein niedriger siedendes Lösungsmittel, ein leichtflüchtiges Produkt oder überschüssiges Edukt abgetrennt werden.

Vor, während oder nach der Reaktion können ein oder mehrere Stabilisatoren zugesetzt werden. Dies können beispielsweise Säure- oder Basefänger (d.h. z.B. Basen, Säuren, Puffer, Amphotere) oder Radikalinhibitoren sein. Als Radikalinhibitoren können beispielsweise Phenolderivate wie 2,6-Di-*tert*-butyl-4-methylphenol (BHT) oder 2,6-Di-*tert*-butylphenol, Thiole wie Dodecylmercaptan, oder Sulfide wie Phenothiazin zugesetzt werden. Sauerstoff kann beispielsweise durch Einstellen eines geringen Sauerstoffpartialdrucks, beispielsweise p(O₂) = 1 Pa bis 1000 Pa, als Inhibitor, gegebenenfalls in Kombination mit weiteren Radikalfängern, eingesetzt werden.

Das Verfahren beinhaltet mindestens einen destillativen Verfahrensschritt. Dabei wird mindestens ein Silan der allgemeinen Formel I von mindestens einem Hochsieder-Lösungsmittel **HS-LM,** das unter den Bedingungen des destillativen Verfahrensschritts einen höheren Siedepunkt als das Silan der allgemeinen Formel I aufweist, teilweise oder vollständig destillativ getrennt. Teilweise bedeutet hierbei, dass das Massenverhältnis von Silan der allgemeinen Formel I zu **HS-LM** im Destillat größer ist als in dem Rohgemisch vor der Destillation. Das Silan der allgemeinen Formel I geht leichter ins Destillat über als **HS-LM;** das Silan der allgemeinen Formel I wird im Destillat und **HS-LM** wird im Sumpf angereichert. Vorzugsweise wird mehr als 80% der im undestillierten Rohgemisch vorhandenen Menge an Silan der allgemeinen Formel I aus dem Gemisch herausdestilliert, bevorzugt mehr als 90%, besonders bevorzugt mehr als 95%. Eine vollständigere Abtrennung des Silans der allgemeinen Formel I vom Hochsieder-Lösungsmittel **HS-LM** kann beispielsweise durch Anwenden eine höheren Temperatur während der Destillation, vermindertem Druck, einer effizienten Kolonne oder eines **HS-LM,** das einen großen Siedepunktabstand zum Silan der allgemeinen Formel I aufweist (besonders bevorzugt mehr als 30 K über dem Siedepunkt des Silans der allgemeinen Formel I unter den Bedingungen des destillativen Verfahrensschritts) erzielt werden. In einer bevorzugten Ausführungsform wird die Destillation so lange weitergeführt, bis das Silan der allgemeinen Formel I vollständig abdestilliert wurde und nur noch ein Strom hauptsächlich enthaltend oder bestehend aus **HS-LM** am Kopf übergeht. Das Verfahren kann auch mehrere, beispielsweise zwei oder drei destillative Verfahrensschritte, beinhalten.

In der Regel wird der destillative Verfahrensschritt frühestens begonnen, wenn bei der Reaktion der gewünschte Umsatz von Carbonsäuresalz der allgemeinen Formel II und/oder Silan der allgemeinen Formel III erreicht ist. Bei unvollständiger Reaktionsführung kann es auch während der Ausführung des destillativen Verfahrensschritts zu weiterem Reaktionsfortschritt kommen, was jedoch häufig dadurch limitiert wird, dass das Silan der allgemeinen Formel III in der Regel während der Destillation aus dem Reaktionsgemisch destillativ entfernt wird, was einen weiteren Umsatz mit dem Carbonsäuresalz der allgemeinen Formel II, das in der Regel im Sumpf verbleibt, verhindert. Wenn das Silan der allgemeinen Formel III jedoch einen höheren Siedepunkt aufweist als das Silan der allgemeinen Formel I, dann kann der destillative Verfahrensschritt auch vorteilhaft und vorzugsweise gleichzeitig mit der Reaktion ausgeführt werden oder zeitlich zumindest teilweise mit der Reaktion überlappen. Dabei werden Druck, Temperatur und Trennleistung im destillativen Verfahrensschritt so eingestellt, dass das Silan der allgemeinen Formel I überdestilliert und das Silan der allgemeinen Formel III im Rücklauf bzw. im Sumpf verbleibt, wo es weiter mit dem Carbonsäuresalz der allgemeinen Formel II abreagieren kann. Diese Ausführungsform gelingt in der Regel dann, wenn die Gruppe **X** polar ist und/oder eine hohe Molmasse aufweist, beispielsweise wenn **X** ausgewählt wird aus Alkyl- oder Arylsulfonatgruppen wie Methansulfonat, Trifluormethansulfonat, Benzolsulfonat, *p*-Toluolsulfonat, *p*-Chlorbenzolsulfonat, und gleichzeitig die Gruppe **R¹** unpolar ist und/oder eine geringe Molmasse aufweist, beispielsweise wenn **R¹** ausgewählt wird aus Wasserstoff, Methyl, Ethyl, *n*-Propyl, *iso*-Propyl, *n*-Butyl, *sec-*Butyl, *tert*-Butyl, Vinyl, 1-Methylvinyl oder 2-Methylvinyl.

Der destillative Verfahrensschritt kann beispielsweise als Batchdestillation, kontinuierlich, als Fallfilm-, Kurzweg- oder Dünnschichtdestillation, über Kolonnen mit Trennleistung wie beispielsweise Füllkörper- oder Siebbodenkolonnen, erfolgen. Das zu destillierende Rohgemisch wird dabei beispielsweise durch Wasser, Öl, gegebenenfalls überspannten Dampf oder elektrisch beheizt und das Destillat an einem beispielsweise luft-, wasser- oder solegekühlten Kühler auskondensiert. Vorzugsweise wird der destillative Verfahrensschritt bei einer Sumpf- bzw. Dünnschicht- bzw. Filmtemperatur von 30-300 °C, bevorzugt 40-260 °C, besonders bevorzugt 60-220 °C und bei einer Kopftemperatur (gemessen am Übergang kurz vor der Kondensation) von vorzugsweise 20-260 °C, bevorzugt 30-220 °C, besonders bevorzugt 40-180 °C ausgeführt. Vorzugsweise wird der destillative Verfahrensschritt bei einem Druck, gemessen in der Sumpfblase bzw. über der Dünnschichtverdampfung bzw. über dem Verdampfungsfilm, von 2 Pa bis 500 kPa, bevorzugt 10 Pa bis 130 kPa, besonders bevorzugt 20 Pa bis 90 kPa ausgeführt. Vorzugsweise wird der destillative Verfahrensschritt bei einem Druck, gemessen am Übergang des Destillats kurz vor der Kondensation, von 1 Pa bis 400 kPa, bevorzugt 5 Pa bis 120 kPa, besonders bevorzugt 10 Pa bis 80 kPa ausgeführt.

Das Hochsieder-Lösungsmittel **HS-LM** kann dabei schon von Beginn des destillativen Verfahrensschritts an im Gemisch vorhanden sein, wenn es beispielsweise vor, während oder nach der Reaktion zugegeben wurde; es kann auch vor oder während des destillativen Verfahrensschritts zugegeben werden. Beispielsweise kann das Silan der allgemeinen Formel **I** aus dem Gemisch herausdestilliert werden und der Sumpf wird währenddessen durch Zugabe von ausreichenden Mengen an **HS-LM** rührbar und destillierbar gehalten.

Das Reaktionsgemisch kann beispielsweise wie angefallen dem destillativen Verfahrensschritt unterworfen werden. In der Regel enthält das Reaktionsgemisch teilweise oder vollständig ungelöstes Salz **[M^{a+}]X⁻ₐ.** Gelöstes Salz **[M^{a+}]X⁻ₐ** kann während der Ausführung des destillativen Verfahrensschritts ausfallen, beispielsweise wenn die Temperaturführung oder das destillativ bedingte Einengen des Gemisches die Fällung begünstigt, oder ungelöstes Salz **[M^{a+}]X⁻ₐ** kann während der Ausführung des destillativen Verfahrensschritts in Lösung gehen, beispielsweise wenn die Temperaturführung die Löslichkeit begünstigt oder wenn ein polares Hochsieder-Lösungsmittel **HS-LM** eingesetzt wird, wie beispielsweise Sulfolan, und ein unpolares Produkt herausdestilliert wird, so dass der Destillationssumpf im Zuge der Destillation polarer wird. Analoge Lösungs-/Fällungsvorgänge können gegebenenfalls Carbonsäuresalz der allgemeinen Formel II betreffen, das während der Destillation zugegen sein kann, beispielsweise wenn es im Überschuss eingesetzt wurde oder wenn es unvollständig abreagiert hat.

Bevorzugt wird das Gemisch, das aus der Reaktion des Carbonsäuresalzes der allgemeinen Formel II mit dem Silan der Formel allgemeinen III stammt, ohne weitere Verfahrensschritte, wie beispielsweise Filtration oder Phasentrennung, direkt einem destillativen Verfahrensschritt zugeführt. Die Phasen des zu destillierenden Gemisches können jedoch optional vor Ausführung des destillativen Verfahrensschritts getrennt werden. So kann beispielsweise ein Feststoff durch Filtration, Zentrifugation, Sedimentieren, Dekantieren oder Absaugen abgetrennt werden. In der Regel handelt es sich bei anfallenden Feststoffen um Salze **[M^{a+}])X⁻ₐ,** gegebenenfalls auch um Carbonsäuresalze der allgemeinen Formel II oder Katalysatoren. Der Filterkuchen, das Sediment bzw. das zentrifugationspellet werden vorzugsweise nachgewaschen, bevorzugt mit einem Hochsieder-Lösungsmittel **HS-LM,** und die Waschlösung wird vorzugsweise zusammen mit der Produktlösung dem destillativen Verfahrensschritt zugeführt. Enthält der Feststoff einen Katalysator, so kann das Lösungsmittel beim Nachwaschen des Filterkuchens beispielsweise so gewählt werden, dass in einem ersten Waschgang nur das anhaftende Reaktionsprodukt als Lösung ausgewaschen wird, welches vorzugsweise dem destillativen Verfahrensschritt zugeführt wird, und in einem weiteren Waschgang kann durch Wahl eines geeigneten anderen Lösungsmittels der Katalysator ausgewaschen werden, ohne dass andere Salze nennenswert in Lösung gehen, und der so ausgewaschene Katalysator kann, gegebenenfalls nach Abtrennung des Lösungsmittels, vorzugsweise dem Recycling zugeführt werden. Mehrere flüssige Phasen können vor der Ausführung des destillativen Verfahrensschritts gegebenenfalls getrennt werden. Vorzugsweise werden die Phasen, die die höchsten Produktkonzentrationen aufweisen, dem destillativen Verfahrensschritt zugeführt. Katalysatoren können flüssige Phasen bilden, die auch Lösungsmittel, Edukte und Produkte enthalten können. Ob solche Katalysatorphasen vorzugsweise dem Destillationsgut oder vorzugsweise direkt dem Recycling zugeführt werden, hängt von deren Produktgehalt ab und davon, ob die Katalysatorphasen im destillativen Verfahrensschritt stören, was Fachleute leicht durch Vorproben feststellen können.

Lösungsmittel können flüssige Phasen bilden, die auch Katalysatoren, Edukte und Produkte enthalten können. Ob solche Lösungsmittelphasen vorzugsweise dem Destillationsgut oder vorzugsweise direkt dem Recycling zugeführt werden, hängt von deren Produktgehalt ab und davon, ob die Katalysatorphasen im destillativen Verfahrensschritt stören, was Fachleute leicht durch Vorproben feststellen können. Handelt es sich bei den Lösungsmittelphasen um Hochsieder-Lösungsmittel **HS-LM** oder bestehen diese zu 50% oder mehr aus **HS-LM,** so werden diese Phasen vorzugsweise dem Destillationsgut zugeführt.

Vor, während oder nach der Destillation können ein oder mehrere Stabilisatoren zugesetzt werden. Stabilisatoren sind weiter oben beschrieben, diese können auch im destillativen Verfahrensschritt eingesetzt werden.

Das Destillat, das mindestens ein Silan der allgemeinen Formel I und gegebenenfalls weitere Verbindungen enthält, kann redestilliert werden, beispielsweise wenn weitere Aufreinigung oder Trennung verschiedener Silane der allgemeinen Formel I. voneinander oder von Silanen der allgemeinen Formel III erwünscht ist. Die vorzugsweise, bevorzugt bzw. besonders bevorzugt anzuwendenden Destillationsbedingungen sind dieselben wie oben beschrieben. Weist das Destillat mehrere Phasen auf, beispielsweise mit dem Silan der allgemeinen Formel I nicht-mischbare Lösungsmittelphasen, so kann das Destillat beispielsweise durch Phasenseparation und gegebenenfalls Redestillation weiter aufgearbeitet werden.

Vorzugsweise werden Lösungsmittel, Katalysatoren und Stabilisatoren zurückgewonnen und dem Recycling zugeführt, d.h. im erfindungsgemäßen Verfahren oder in einem anderen Prozess wiederverwendet. Dies kann vor oder nach dem destillativen Verfahrensschritt geschehen.

Lösungsmittel, die niedriger sieden als das Silan der allgemeinen Formel I können als Vorfraktion gewonnen werden; sie sind in der Regel ohne weitere Aufarbeitung wieder einsetzbar.

Lösungsmittel, die höher sieden als das Silan der allgemeinen Formel I, also HS-LM, fallen beim destillativen Verfahrensschritt als Destillationssumpf an (bzw. im Falle einer Dünnschicht-, Fallfilm- oder Kurzwegdestillation als unverdampfter Sumpfablauf). Sie können unverändert wieder eingesetzt oder beispielsweise durch Filtration, Sedimentieren und Absaugen, Dekantieren, Destillation, Extraktion, Anstrippen.oder Trocknung oder eine Kombination solcher Methoden aufgearbeitet werden. Ob ein Wiedereinsatz mit oder ohne Reinigungsschritt erfolgt, hängt vom Verunreinigungsprofil des Lösungsmittels ab. So werden beispielsweise stark salzhaltige (i.d.R. mehr als 10% Salz) Lösungsmittel vor dem Wiedereinsatz vorzugsweise filtriert oder, wenn HS-LM nicht vollständig mit Wasser mischbar ist, gegebenenfalls unter Zusatz weiterer Komponenten, die beispielsweise die Phasentrennung verbessern, mit einem Lösungsmittel komplementärer Polarität, beispielsweise mit Wasser (wenn für **HS-LM** ein unpolares Lösungsmittel gewählt wurde) extrahiert. Wird ein Extraktionsschritt angestrebt, so wird für **HS-LM** vorzugsweise ein nicht vollständig mit Wasser mischbares, unpolares Lösungsmittel, beispielsweise ein Ether, ein Ester, ein Kohlenwasserstoff, ein Chlorkohlenwasserstoff oder ein Keton mit mindestens 4 Kohlenstoffatomen - bevorzugt ein Kohlenwasserstoff - oder Mischungen solcher Lösungsmittel gewählt, und als Extraktionslösungsmittel wird vorzugsweise Wasser verwendet. Bilden Katalysatoren eine von **HS-LM** getrennte Phase, so wird die Katalysatorphase vorzugsweise vor dem Extraktionsschritt abgetrennt, was für feste Katalysatorphasen beispielsweise durch Filtration, Sedimentieren und Absaugen oder Dekantieren und für flüssige oder gelöste Katalysatoren durch Phasentrennung erfolgen kann. Verbleibt **HS-LM** im Wasser, so kann dieses beispielsweise durch Anstrippen, Azeotropieren, Adsorption oder Extraktion mit einem unpolaren niedrigsiedenden Lösungsmittel (Siedepunkt vorzugsweise < 150 °C, bevorzugt < 120 °C, besonders bevorzugt < 100 °C) und Phasentrennung entfernt werden, wobei Reste des niedrig siedenden Lösungsmittels anschließend leicht durch Anstrippen aus der Wasserphase entfernt werden können.

Enthält **HS-LM** Katalysatoren, so können diese vorzugsweise zusammen mit **HS-LM** in demselben Stoffstrom dem Recycling zugeführt werden. Wird **HS-LM** vor der Wiederverwendung filtriert, so kann ungelöster Katalysator, je nach Löslichkeit in **HS-LM** oder im Filterkuchen verbleiben; abfiltrierter Katalysator kann durch ein geeignetes Lösungsmittel aus dem Filterkuchen herausgelöst und, gegebenenfalls nach Abtrennung des Lösungsmittels, wieder eingesetzt werden. Wird **HS-LM** vor der Wiederverwendung destilliert, so können Katalysatoren beispielsweise aus dem Sumpf mit einem geeigneten Lösungsmittel herausgelöst oder abfiltriert werden und wieder eingesetzt werden. Bilden Katalysatoren eine von **HS-LM** getrennte Phase, so kann die Katalysatorphase leicht abgetrennt werden, was für feste Katalysatorphasen beispielsweise durch Filtration, Sedimentieren und Absaugen oder Dekantieren und für flüssige Katalysatoren durch Phasentrennung erfolgen kann. Wird **HS-LM** vor der Wiederverwendung extrahiert, so können Katalysatoren in **HS-LM** oder im Extraktionslösungsmittel verbleiben. In **HS-LM** verbliebener Katalysator kann zusammen mit **HS-LM** wiederverwendet werden. Im Extraktionslösungsmittel verbliebener Katalysator kann beispielsweise rückextrahiert und, gegebenenfalls nach Abtrennung des Rückextraktionslösungsmittels, wieder eingesetzt werden, beispielsweise durch Rückextraktion mit einem Ether, Ester, Kohlenwasserstoff, Chlorkohlenwasserstoff, Keton oder Alkohol.

Wurde ein Salz als Katalysator verwendet, so kann dieses im Zuge des Verfahrens Anionen- oder Kationenaustauschreaktionen erfahren haben, so kann beispielsweise ein als Phasentransferkatalysator eingesetztes Ammonium- oder Phosphoniumsalz seine Anionen gegen X- oder gegen das eingesetzte Carboxylatanion R¹-C(=O)-O⁻ austauschen, oder ein aktivierend eingesetztes Bromid oder Iodid kann sein Kation gegen [M^{a+}] ausgetauscht haben. Solange das katalyserelevante Ion (bei Phasentransferkatalysatoren das Kation, bei aktivierenden Bromiden oder Iodiden das Anion) noch zugegen ist, ist das Katalysatorsalz in der Regel noch aktiv und damit im Verfahren und im Recycling nach wie vor verwendbar.

Alle vorstehenden Symbole der vorstehenden Formeln weisen ihre Bedeutungen jeweils unabhängig voneinander auf. Soweit nicht anders angegeben, bedeuten die vorstehenden %-Angaben Gewichts-Prozente. Soweit nicht anders angegeben, beziehen sich Ausbeuteangaben in % des Theoretischen (% d.Th.) auf die eingesetzte Stoffmenge an Silan. In allen Formeln ist das Siliciumatom vierwertig. Soweit nicht anders angegeben, stellen alle Druckangaben absolute Druckangaben dar. Soweit nicht anders angegeben, umfasst die Definition "Heteroatom" alle Elemente ausser Kohlenstoff und Wasserstoff.

### Beispiele

So weit nicht anders angegeben werden die beschriebenen Verfahrensschritte bei atmosphärischem Druck und Raumtemperatur (20-25 °C) durchgeführt.

### Beispiel 1. Synthese von (Caprylatomethyl)trimethoxysilan

(MeO)₃SiCH₂Cl + NaOC(O)-*n*-C₇H₁₅ -> (MeO)₃SiCH₂OC(O)-*n*-C₇H₁₅ + NaCl

Eine Mischung aus 775 mL Bis(2-ethylhexyl)phthalat (= **HS-LM**), 11,46 g (33,8 mmol) Tetrabutylphosphoniumbromid (= Phasentransferkatalysator) und 302,6 g (1,82 mol) Natriumcaprylat wurde auf 120-125 °C aufgeheizt. Unter Rühren wurden 282,5 g (1,66 mol) (Chlormethyl)trimethoxysilan zudosiert. Das Gemisch wurde weitere 2 Stunden bei derselben Temperatur gerührt. Ein Gaschromatogramm (FID-Detektor) zeigte ein Peakflächenverhältnis des Edukts (Chlormethyl)trimethoxysilan zum Produkt (Caprylatomethyl)trimethoxysilan (= ein Silan der allgemeinen Formel I) von 1 : 948. Das Produkt wurde bei 1,1-1,3 mbar (Kopf), 122-134 °C (Kopf) und 141-211 °C (Blase) über eine Vigreuxkolonne (20 cm) destilliert, man erhielt 349 g (1,25 mol, 76% d.Th.) des Produkts (Caprylatomethyl)trimethoxysilan als schwach gelbliche Flüssigkeit; Reinheit 86% (GC-Flächen-%). Das Lösungsmittel, Natriumchlorid, überschüssiges Natriumcaprylat und der Phasentransferkatalysator in Form des Chlorid-, Bromid- und Capryltatsalzes des Tetrabutylphosphoniums verblieben im Sumpf. Das Produkt wurde bei 1,8-2,2 mbar (Kopf), 129-131 °C (Kopf) und 151-155 °C (Sumpf) über eine Füllkörperkolonne (20 cm) redestilliert, nach der Redestillation veblieb ein schwacher gelber Farbton im Produkt; Reinheit 93,2% (GC-Flächen-%).

### Beispiel 2. Synthese von (Acetoxymethyl)trimethoxysilan

(MeO)₃SiCH₂Cl + NaOC(O)Me -> (MeO)₃SiCH₂OC(O)Me + NaCl

Eine Mischung aus 179 L Hydroseal G 400 H (= **HS-LM,** laut Herstellerangabe der Fa. Total ein C₁₇-C₂₁-Kohlenwasserstoffgemisch mit einer Dichte von 815 kg/m³, einem Siedebereich von 304-349 °C und einem Aromatengehalt von 0,01%) und 100 kg (1,22 kmol) Natriumacetat wurde eine Stunde 150 °C / 1 mbar aufgeheizt (Trocknung). Die Heizung wurde abgestellt, das Vakuum mit Stickstoff gebrochen und 7,51 kg (22,2 mol) Tetrabutylphosphoniumbromid (= Phasentransferkatalysator) zugegeben und die Temperatur auf 120 °C eingestellt. Unter Rühren wurden 189,2 kg (1,11 kmol) (Chlormethyl)trimethoxysilan innerhalb von 2,5 Stunden zudosiert. Das Gemisch wurde weitere 4 Stunden bei derselben Temperatur gerührt. Eine abgekühlte Probe trennte sich in 3 Phasen (1 fest, 2 flüssig). Die feste Phase enthielt hauptsächlich Natriumchlorid und Natriumacetat, die untere flüssige Phase hauptsächlich (Acetoxymethyl)trimethoxysilan (= ein Silan der Formel I) und den Phasentransferkatalysator in Form des Chlorid-, Bromid- und Acetatsalzes des Tetrabutylphosphoniums, und die obere Phase enthielt hauptsächlich das Lösungsmittel und geringe Konzentrationen an (Acetoxymethyl)trimethoxysilan. Ein Gaschromatogramm (FID-Detektor) der Silanphase zeigte ein Peakflächenverhältnis des Edukts (Chlormethyl)trimethoxysilan zum Produkt (Acetoxymethyl)trimethoxysilan von 1 : 5605. Das Produkt wurde über eine Siebbodenkolonne destilliert; bei 10 mbar (Kopf), 60-61 °C (Kopf) und 89-125 °C (Blase) wurde ein sehr reiner Mittellauf erhalten (171,1 kg, Reinheit 99,6%; der Vorlauf (10 mbar (Kopf), 26-60 °C (Kopf), 89-94 °C (Blase); 5,3 kg, Reinheit.94,9%) und der Nachlauf (10 → 1 mbar (Kopf), 61 -> 40 °C (Kopf), 125-160 °C (Blase); 26,7 kg, Reinheit 98,1%) wurden vereinigt und redestilliert (Redestillation: Siebbodenkolonne, 24 mbar (Kopf), 79-81 °C (Kopf), 100-110 °C (Blase)), wobei weitere 31,0 kg des Produkts erhalten wurden (Reinheit 99,1%); Reinheitsangaben in GC-Flächen-%. Man erhielt so insgesamt 202,1 kg (1,04 kmol, 94% d.Th.) des Produkts (Acetoxymethyl)trimethoxysilan als farblose Flüssigkeit. Das Lösungsmittel, Natriumchlorid, überschüssiges Natriumacetat und der Phasentransferkatalysator in Form des Chlorid-, Bromid- und Acetatsälzes des Tetrabutylphosphoniums verblieben im Sumpf.

### Beispiel 3. Synthese von (Acetoxymethyl)trimethoxysilan

(MeO)₃SiCH₂Cl + NaOC(O)Me -> (MeO)₃SiCH₂OC(O)Me + NaCl

Man verfuhr analog Beispiel 2, wobei als Edukte Natriumacetat (312 g, 3,81 mol) und (Chlormethyl)trimethoxysilan (563 g, 3,30 mol), als Katalysator Tetrabutylphosphoniumbromid (22,46 g, 66,2 mmol) und als Lösungsmittel Methyllaurat (525 mL) eingesetzt wurden. Vor der Zugabe des Silans wurden die übrigen Komponenten gemischt und bei 116 °C / 4 mbar angestrippt (Trocknung, 16 g Destillat). Das Silan wurde bei 120 °C innerhalb von 2 Stunden zudosiert, das Gemisch wurde weitere 4 Stunden bei 120 °C erhitzt und dann bei 10-11 mbar (Kopf), 74-76 °C (Kopf) und 88-122 °C (Blase) über eine Füllkörperkolonne (20 cm) destilliert. Man erhielt im Destillat 608 g (3,13 mol, 95% d.Th.) an (Acetoxymethyl)trimethoxysilan; Reinheit 98,6% (GC-Flächen- %). Bei 3,1 mbar (Kopf), 113 °C (Kopf) und 128 °C (Blase) begann hernach das Lösungsmittel überzugehen. Durch Überdestillieren einer geringen Menge (ca. 10 g) des Lösungsmittels konnte das Produkt (Acetoxymethyl)trimethoxysilan vollständig aus dem Sumpf ausgeschleppt werden. Das übrige Lösungsmittel, Natriumchlorid, überschüssiges Natriumacetat und der Phasentransferkatalysator (in Form des Bromid-, Chlorid- und Acetatsalzes des Tetrabutylphosphoniums) verblieben im Sumpf.

### Beispiel 4. Synthese von (Acetoxymethyl)dimethoxymethylsilan

(MeO)₂MeSiCH₂Cl + KOC(O)Me → (MeO)₂MeSiCH₂OC(O)Me + KCl

Man verfuhr analog Beispiel 2, wobei als Edukte Kaliumacetat (405 g, 4,13 mol) und (Chlormethyl)dimethoxymethylsilan (535 g, 3,46 mol), als Katalysator Tetrabutylphosphoniumbromid (35,0 g, 10,3 mmol) und als Lösungsmittel Diethylenglykoldibutylether (525 mL) eingesetzt wurden. Das Produkt wurde nach der Reaktion bei 10 mbar (Kopf), 61-70 °C (Kopf) und 80-119 °C (Blase) über eine Füllkörperkolonne (20 cm) destilliert. Man erhielt im Destillat 560 g (3,14 mol, 91% d.Th.) an (Acetoxymethyl)dimethoxymethylsilan; Reinheit 98,0% (GC-Flächen-%). Bei 10 mbar (Kopf), 118 °C (Kopf) und 124 °C (Blase) begann hernach das Lösungsmittel überzugehen; durch Überdestillieren von ca. 10 g Lösungsmittel konnte das (Acetoxymethyl)dimethoxymethylsilan vollständig aus dem Sumpf ausgeschleppt werden. Das Lösungsmittel, Kaliumchlorid, überschüssiges Kaliumacetat und der Phasentransferkatalysator (in Form des Bromid-, Chlorid- und Acetatsalzes des Tetrabutylphosphoniums) verblieben im Sumpf.

### Beispiel 5. Synthese von (Acetoxymethyl)dimethoxymethylsilan, wässrige Aufarbeitung des Destillationsrückstandes und Wiedereinsatz (Recycling) von Katalysator und Hochsieder-Lösungsmittel

(MeO)₂MeSiCH₂Cl + NaOC(O)Me -> (MeO)₂MeSiCH₂OC(O)Me + NaCl

### Beispiel 5a: Reaktion und Aufarbeitung

Eine Mischung aus 10,7 L Hydroseal G 400 H (= **HS-LM,** C₁₇-C₂₁-Kohlenwasserstoffgemisch, s.o.) und 5,97 kg (72,8 mol) Natriumacetat wurde eine Stunde 150 °C / 2 mbar aufgeheizt (Trocknung). Die Heizung wurde abgestellt, das Vakuum mit Stickstoff gebrochen und 450 g (1,32 mol) Tetrabutylphosphoniumbromid (= Phasentransferkatalysator) zugegeben und die Temperatur auf 120 °C eingestellt. Unter Rühren wurden 10,24 kg (66,2 mol) (Chlormethyl)dimethoxymethylsilan (= ein Silan der Formel II) innerhalb von 2 Stunden zudosiert. Das Gemisch wurde weitere 3 Stunden bei derselben Temperatur gerührt. Das Produkt wurde über eine Siebbodenkolonne herausdestilliert; bei 53-54 mbar (Kopf), 70-73 °C (Kopf) und 100-125 °C (Blase) wurde im Destillat das Produkt (Acetoxymethyl)dimethoxymethylsilan (10,8 kg, 60,6 mol, 92% d.Th.; Reinheit 99,5% (GC-Flächen-%)) als farblose Flüssigkeit erhalten. Das Lösungsmittel, Natriumchlorid, überschüssiges Natriumacetat und der Phasentransferkatalysator in Form des Chlorid-, Bromid- und Acetatsalzes des Tetrabutylphosphoniums verblieben im Sumpf (insgesamt 18,5 kg).

### Beispiel 5b: Rückgewinnung von Lösungsmittel und Katalysator

Von dem Destillationssumpf aus Beispiel 5a wurde eine Probe von 963 g (1042 mL) unter Rühren so entnommen, dass die Probe repräsentative Aliquot-Anteile an Flüssigkeit und Feststoff enthielt. Die noch warme Probe (80 °C) wurde unter Rühren mit einer Menge Wasser versetzt, die gerade ausreichte, um das Salz zu lösen (633 mL Wasser mit einer Temperatur von 19 °C). Danach betrug die Temperatur des Gemisches 44 °C. Beim Stehenlassen wurde zügige Separation des Gemisches in drei klare, flüssige Phasen beobachtet: Oben, Hydroseal-reiche Phase (880 mL, 857 g), gelb; Mitte, Katalysator-reiche Phase (Katalysator in Form des Chlorid-, Bromid- und Acetatsalzes des Tetrabutylphosphoniums; 60 mL, 95,4 g), dunkelbraun; unten, wässrige Phase mit gelösten Natriumsalzen (Chlorid, Bromid, Acetat), gelb. Per induktiv gekoppeltem Plasma / optische Emissionsspektroskopie (inductively coupled plasma / optical emission spectroscopy, ICP-OES; analysiertes Element: Phosphor) wurde ermittelt, dass sich von dem ursprünglich eingesetzten Phasentransferkatalysator, berechnet auf die Stoffmenge an Tetrabutylphosphoniumionen im entnommenen Aliquot, 4% in der Hydrosealphase, 18% in der wässrigen Phase und der Rest in der mittleren Phase befanden. Durch kernmagnetische Resonanz (nuclear magnetic resonance, Kern: ³¹P, 202,5 MHz, *δ* = 33,4 ppm, Lösungsmittel d6-Aceton) der mittleren Phase wurde bestätigt, dass der Katalysator nach der Reaktion immer hoch in Form der Tetrabutylphosphoniumsalze vorlag.

Es wurden 300 mL *n*-Butanol zugegeben und die Mischung wurde gerührt. Nach Stehenlassen und Phasentrennung befanden sich gemäß ICP-OES-Untersuchung (Element: Phosphor) 14% des ursprünglich eingesetzten Katalysators in der oberen Hydrosealphase (919 mL, 733 g), 0,4% in der unteren wässrigen Phase (720 mL, 856 g) und der Rest in der mittleren Katalysatorphase (200 mL, 175 g). Der *n*-Butanol befand sich hauptsächlich in der Katalysatorphase; 6,8 g befanden sich in der wässrigen Phase und 0,5 g in der Hydrosealphase (¹H-NMR-Kontrolle mit internem Standard Naphthalin (C₆D₆, obere Hydrosealphase; d6-Aceton, mittlere Katalysatorphase) bzw. 3-Trimethylsilyl-2,2,3,3-d4-propionsäure-Natriumsalz (D₂O, untere wässrige Phase)).

Die wässrige Phase wurde abgetrennt und das *n*-Butanol wurde aus der wässrigen Phase destillativ entfernt, indem 1/10 der wässrigen Phase bei 350 mbar (Kopf), 66-73 °C (Kopf) und 75-80 °C (Blase) abdestilliert wurden (zweiphasiges Destillat, hauptsächlich bestehend aus *n*-Butanol und Wasser); durch diese Azeotropdestillation wurde eine im Rahmen der Nachweisgrenze butanol- und kohlenwasserstofffreie (¹H-NMR-Kontrolle, D₂O) wässrige Phase erhalten.

Die obere Hydrosealphase und die mittlere Katalysatorphase wurden vereinigt und enthaltenes *n*-Butanol wurde destillativ entfernt (300 -> 20 mbar (Kopf), bis 75 °C (Kopf) bzw. bis 95 °C (Blase)). Von dem verbliebenen Gemisch wurde zur Trocknung eine geringe Menge Lösungsmittel (ca. 10 mL Hydroseal G 400 H) über eine Vigreuxkolonne (80 cm) abdestilliert (1-2 mbar (Kopf), 120-135 °C (Kopf), 150-160 °C (Blase)).

### Beispiel 5c: Rückgewinnung von Lösungsmittel und Katalysator

Man verfuhr wie im Beispiel 5b, verwendete jedoch nur 150 mL *n-*Butanol. Hernach enthielt die wässrige Phase 0,3% und die Hydrosealphase 12% des ursprünglich eingesetzten Katalysators, bezogen auf den eingesetzten Aliquot des Sumpfes aus Beispiel 5a. Die weitere Aufarbeitung gelang analog Beispiel 5b.

### Beispiel 5d: Rückgewinnung von Lösungsmittel und Katalysator

Man verfuhr wie im Beispiel 5b, trennte jedoch direkt nach der wässrigen Aufarbeitung die wässrige Phase von den übrigen Phasen ab, bevor die Extraktion mit *n*-Butanol durchgeführt wurde. Allein die Wasserphase wurde mit *n*-Butanol extrahiert; nach der Extraktion enthielt die wässrige Phase noch 0,4% des ursprünglich eingesetzten Katalysators, bezogen auf den eingesetzten Aliquot des Sumpfes aus Beispiel 5a. Das *n*-Butanol enthielt den aus der Wasserphase extrahierten Katalysator. Die weitere Aufarbeitung der extrahierten wässrigen Phase gelang analog Beispiel 5b. Die Hydroseal- und die Katalysatorphase wurden mit der aus der Extraktion stammenden n-Butanolphase (katalysatorhaltig) vereinigt; Aufarbeitung und Wiedereinsatz gelangen analog Beispiel 5e (siehe unten). optional konnte das Abdestillieren von *n*-Butanol und Wasser aus der Hydroseal- und Katalysatorphase im Recyclingschritt auch nach (anstatt vor, vgl. aus Beispiel 5e) Zugabe des Natriumacetats erfolgen.

Beispiel 5b, c und d zeigen, wie ein Produkt des erfindungsgemäßen Verfahrens ohne einen einzigen zeitraubenden Filtrationsschritt aufgearbeitet werden kann, wie Lösungsmittel und Katalysator durch wässrige Aufarbeitung zurückgewonnen werden können und wie die dabei anfallende wässrige Phase vom Katalysator und von Lösungsmitteln befreit werden kann, so dass die Salzfracht in Form der aufgearbeiteten wässrige Phase der Entsorgung zugeführt werden kann.

### Beispiel 5e: Wiedereinsatz (Recycling) von Lösungsmittel und Katalysator

Die obere Hydrosealphase und die mittlere Katalysatorphase aus Beispiel 5b wurden mit 180 g (2,2 mol) Natriumacetat versetzt und die Suspension wurde durch Abdestillieren von 10 mL Hydroseal G 400 H über eine Vigreuxkolonne (80 cm) getrocknet (1-2 mbar (Kopf), 120-135 °C (Kopf), 150-160 °C (Blase)). Die Suspension wurde auf 130 °C abgekühlt, dann wurden 308 g (2,00 mol) (Chlormethyl)dimethoxymethylsilan innerhalb von 47 Minuten zudosiert. Das Produkt wurde über eine Vigreuxkolonne (80 cm) herausdestilliert; bei 30 mbar (Kopf), 71-73 °C (Kopf) und 73-80 °C (Blase) wurde im Destillat das Produkt (Acetoxymethyl)dimethoxymethylsilan (334 g, 1,87 mol, 94% d.Th.; Reinheit 99,1% (GC-Flächen-%)) als farblose Flüssigkeit erhalten. Das Lösungsmittel, Natriumchlorid, überschüssiges Natriumacetat und der Phasentransferkatalysator in Form des Chlorid-, Bromid- und Acetatsalzes des Tetrabutylphosphoniums verblieben im Sumpf.

Das Beispiel 5e zeigt, dass zurückgewonnenes Lösungsmittel und zurückgewonnener Katalysator in dem erfindungsgemäßen Verfahren wiederverwendet werden können.

### Beispiel 6. Synthese von (Formoxymethyl)trimethoxysilan

(MeO)₃SiCH₂Cl + NaOC(O)H -> (MeO)₃SiCH₂OC(O)H + NaCl

Eine Mischung aus Natriumformiat (53,6 g, 788 mmol) und Hochsieder-Lösungsmittel Dimethylpropylenharnstoff (DMPU, 1,3-Dimethyl-3,4,5,6-tetrahydro-2(*1H*)-pyrimidinon) (400 mL) wurde mit 100 mL Toluol versetzt. Um das Gemisch zu trocknen, wurde das Toluol abdestilliert (47 mbar (Kopf), 26-29 °C (Kopf), 68-90 °C (Blase)), dann wurde das Vakuum verschärft, bis nur noch DMPU überging (1,2 mbar (Kopf), 89 °C (Kopf), 110 °C (Blase); ca. 10 g DMPU-Destillat). Das verbliebene Gemisch wurde auf 100 °C abgekühlt, innerhalb von 5 Minuten wurde (Chlormethyl)trimethoxysilan (128 g, 750 mmol) zudosiert, das resultierende Gemisch wurde 30 Minuten bei 100 °C und weitere 2,5 Stunden bei 115 °C gerührt. Eine Reaktionskontrolle zeigte vollständigen Umsatz des (Chlormethyl)trimethoxysilans sowie das gewünschte Produkt (Formoxymethyl)trimethoxysilan und als Nebenprodukte Methylformiat, Tetramethoxysilan und Siloxane der gebildeten Silane. Das Produkt wurde bei 100 °C Temperatur (Blase) destilliert, wobei das Vakuum von 15 mbar langsam auf 3 mbar verschärft wurde (Sdp. 59-91 °C (Kopf)). Man erhielt im Destillat 66,9 g (Formoxymethyl)trimethoxysilan (Reinheit 73,6% (GC-Flächen-%)); das Destillat enthielt, berechnet auf Reinheit, 61,7 g (342 mmol, 46% d.Th.) an (Formoxymethyl)trimethoxysilan. Das Lösungsmittel, Natriumchlorid und überschüssiges Natriumformiat verblieben im Sumpf.

### Beispiel 7. Synthese von (Formoxymethyl)methoxydimethylsilan

(MeO)Me₂SiCH₂Cl + NaOC(O)H -> (MeO)Me₂SiCH₂OC(O)H + NaCl

Eine Mischung aus Natriumformiat (5,00 kg, 73,5 mol) und Hydroseal G 400 H (14,9 L) wurde eine Stunde lang bei 1 mbar auf 150 °C erhitzt (Trocknung). Das Vakuum wurde mit Stickstoff gebrochen und das Gemisch auf 120 °C abgekühlt, dann wurde als Katalysator Tetrabutylphosphoniumbromid (450 g, 1,34 mol) zugegeben. Innerhalb von 2 Stunden wurde (Chlormethyl)methoxydimethylsilan (9,27 kg, 66,8 mol) zudosiert und das resultierende Gemisch wurde 3 Stunden bei 120 °C gerührt. Ein Gaschromatogramm (FID-Detektor) zeigte ein Peakflächenverhältnis des Edukts (Chlormethyl)methoxydimethylsilan zum Produkt (Formoxymethyl)methoxydimethylsilan von 1 : 274. Das Produkt wurde bei 155 mbar (Kopf), 73-76 °C (Kopf) und 100-151 °C (Blase) destilliert. Das Lösungsmittel, Natriumchlorid, überschüssiges Natriumformiat und der Phasentransferkatalysator (in Form des Bromid-, Chlorid- und Formiatsalzes des Tetrabutylphosphoniums) verblieben im Sumpf. Man erhielt im Destillat 9,41 kg (Formoxymethyl)methoxydimethylsilan in einer Reinheit von 99,1%, das noch 0,5% an (Chlormethyl)methoxydimethylsilan enthielt; letzteres weist einen niedrigeren Siedepunkt auf als das Produkt und lies sich abtrennen, indem 745 g des Produkts über eine Siebbodenkolonne abdestilliert wurden (198 mbar (Kopf), 87 °C (Kopf), 99 °C (Blase), wobei (Formoxymethyl)methoxydimethylsilan in 99, 7%iger Reinheit in der Blase verblieb (Reinheitsangaben in GC-Flächen-%).

### Beispiel 8. Synthese von (Crotonatomethyl)trimethoxysilan (cis/trans-Gemisch)

KOH + *trans*-HOC(O)CH=CHMe → *trans*-KOC(O)CH=CHMe + H₂O

Crotonsäure (75,0 kg, 871 mol) wurde in 90 L Wasser in einem Rührkessel aufgeschlämmt. Es wurde eine 53%ige wässrige Kaliumhydroxid-Lösung in einer Stunde zudosiert, bis ein pH-Wert von 7,1 erreicht wurde. Die Temperatur stieg dabei von 20 °C auf 52 °C an. Es wurde eine weitere Stunde gerührt (pH: 7,25). Die Hauptmenge des Wassers wurde bei 190 -> 130 mbar und 65 -> 60 °C (Blase) abdestilliert. Dann wurde der Rückstand in einen Konustrockner überführt, das übrige Wasser wurde bei 160 -> 130 mbar und 65 -> 60 °C (Blase) abdestilliert (53,3 kg Destillat). Beim Abdestillieren des Wassers waren 777 g Crotonsäure (1% der eingesetzten Menge) mit dem Wasser übergegangen (quantitative HPLC-Kontrolle des abdestillierten Wassers). Der Rückstand wurde eine Stunde bei Beheizung mit relativ 0,5 bar (1,5 bar absolut) Heißdampf (ca. 106 °C) und 9-15 mbar, dann drei weitere Stunden bei relativ 1,5 bar (2,5 bar absolut) Heißdampf (ca. 120 °C) und 3-4 mbar getrocknet. Das Produkt Kaliumcrotonat wurde in 99%iger Ausbeute in Form farbloser feinkristalliner Plättchen erhalten, gemäß HPLC-Kontrolle war es isomerenrein (trans); der pH-Wert einer in Wasser (10 mL) gelösten Probe (1 g) betrug 7-7,5 (Indikatorpapier Neutralit).

### Lösungsmittel: Hochsiedender Anteil aus Hydroseal G 400 H

Hydroseal G 400 H (Kohlenwasserstoffgemisch, s.o.) wurde im Vakuum teilfraktioniert. Ca. 30% des Lösungsmittels wurde im Vakuum bei 3 mbar (Kopf), 19-23 mbar (Blase), 120-130 °C (Kopf) und 175-206 °C (Blase) abdestilliert. Der höher siedende Destillationsrückstand wurde im nächsten Schritt verwendet.

(MeO)₃SiCH₂Cl + *trans*-KOC(O)CH=CHMe -> *cis*/*trans*-(MeO)₃SiCH₂OC(O)CH=CHMe + KCl

Eine Mischung aus *trans-*Kaliumcrotonat (4,97 kg, 40,0 mol), Phenothiazin (Stabilisator; 3,99 g, 20,0 mmol), Tetrabutylphosphoniumbromid (270 g, 79,6 mmol) und dem hochsiedenden Anteil des Hydroseal G 400 H (Destillationsrückstand aus dem vorigen Schritt; 13,2 L) wurde eine Stunde lang bei 3 mbar auf 120 °C erhitzt (Trocknung). Das Vakuum wurde mit Stickstoff gebrochen und das Gemisch auf 130 °C aufgeheizt, dann wurde innerhalb von 1% Stunden (Chlormethyl)trimethoxysilan (6,83 kg, 40,0 mol) zudosiert. Das Gemisch wurde weitere 4 Stunden bei 130 °C gerührt, dann wurde 2,6-Di-tert-butyl-4-methylphenol (BHT, Stabilisator; 4,41 g, 20,0 mmol) zugegeben. Das Produkt wurde bei 1-3 mbar (Kopf), 71-73 °C (Kopf) und 108-158 °C (Blase) herausdestilliert. Man erhielt im Destillat das Produkt (Crotonatomethyl)trimethoxysilan (7,53 kg, 34,2 mol, 85% d.Th.) in Form des *cis*/*trans*-Gemisches (82,6% *cis,* 13,5% *trans*); ferner enthielt das Produkt 3,1% des Konstitutionsisomers (But-3-enoatomethyl)trimethoxysilan; Reinheit 99,2% (Summe der *cis*-*,* trans- und But-3-enoato-Isomeren); daneben enthielt das Destillat 0,13% an (Chlormethyl)trimethoxysilan (Gehalts-/ Reinheitsangaben in GC-Flächen-%). Das Lösungsmittel, Kaliumchlorid, Spuren von unreagiertem Kaliumcrotonat und der Phasentransferkatalysator (in Form des Bromid-, Chlorid- und Crotonatsalzes des Tetrabutylphosphoniums) verblieben im Sumpf. Das (Chlormethyl)trimethoxysilan konnte abgetrennt werden, indem 5% des Produkts bei 2 mbar (Kopf), 57-71 °C (Kopf) und 93-97 °C (Blase) abdestilliert wurden, wobei das (Chlormethyl)trimethoxysilan überging und der größte Teil des Reaktionsprodukts im Rückstand verblieb.

### Beispiel 9. Synthese von (Acetoxymethyl)methoxydimethylsilan

(MeO)Me₂SiCH₂Cl + NaOC(O)Me -> (MeO)Me₂SiCH₂OC(O)Me + NaCl

Eine Mischung aus 20 mL Hochsiederlösungsmittel gemäß Tabelle 1, 13,5 g (165 mmol) Natriumacetat (wasserfrei) und der in der Tabelle 1 angegebenen Menge Phasentransferkatalysator (Mengenangabe in Mol-% bezogen auf die eingesetzte Stoffmenge an Silan) wurde auf die in der Tabelle 1 angegebene Temperatur aufgeheizt und bei dieser Temperatur 30 Minuten lang bei einem Vakuum von 10 mbar getrocknet. Anschließend wurde das Vakuum mit Argon gebrochen, und es wurde bei dieser Temperatur unter Rühren (Chlormethyl)methoxydimethylsilan (20,8 g, 150 mmol) innerhalb von 30 Minuten zudosiert. Das Gemisch wurde weiter bei dieser Temperatur gerührt bis ein Gaschromatogramm (FID-Detektor) bzw. ein ¹H-NMR-Spektrum einen Umsatz des Silans von über 99% anzeigte, die hierfür erforderlichen Reaktionszeiten sind in Tabelle 1 wiedergegeben. Das Produkt wurde anschließend bei 10-90 mbar (Kopf), 50-90 °C (Kopf) und 70-120 °C (Blase) über eine Widmerkolonne (20 cm) abdestilliert, wobei die in Tabelle 1 angegebenen Ausbeuten an (Acetoxymethyl)methoxydimethylsilan als farblose Flüssigkeit mit einer Reinheit von > 99% (GC-Flächen-%) erhalten wurden. Das Lösungsmittel, Natriumchlorid, überschüssiges Natriumacetat und der Phasentransferkatalysator in Form seines Chlorid- und Acetatsalzes (sowie des Bromidsalzes, wenn ein Bromid eingesetzt wurde) verblieben im Sumpf.

**Tabelle 1.**

| **Nr.** | **Lösungsmittel** | **Katalysator** | **T/°C** | **t/h** | **Ausbeute** |
|---|---|---|---|---|---|
| a | Hydroseal G 400 H | 2 Mol-% Bu₄PCl | 120 | 3 | 19,1 g / 79% |
| b | Hydroseal G 400 H | 2 Mol-% Cyphos^{®} IL101 [(H₁₃C₆)₃(H₂₉C₁₄)P]Cl | 120 | 2 | 18,8 g / 77% |
| c | Hydroseal G 400 H | 2 Mol-% Aliquat^{®} 336 [Me (H₁₇₋₂₁C₈₋₁₀) ₃N] Cl | 90 | 9 | 22,4 g / 92 % |
| d | Hydroseal G 400 H | 2 Mol-% Arquad^{®} 2HT-75 [Me₂(H₃₃₋₃₇C₁₆₋₁₈)₂N]Cl | 120 | 7 | 17,8 g / 72% |
| e | Hydroseal G 400 H | 2 Mol-% Präpagen^{®} WK [Me₂(H₃₃₋₃₇C₁₆₋₁₈)₂N]Cl | 120 | 11 | 16,6 g / 68% |
| f | Hydroseal G 400 H | 2,5 Mol-% Hexaethylguanidiniumchlorid | 120 | 1 | 22,4 g / 92% |
| g | Hydroseal G 400 H | 0,5 Mol-% Hexaethylguanidiniumchlorid | 120 | 3 | 22,3 g / 91% |
| h | PPG 2000 | 2 Mol-% Bu₄PBr | 120 | 4 | 16,2 g / 67% |
| i | Tributylphosphat | 2 Mol-% Bu₄PBr | 120 | 2 | 14,4 g / 59% |
| j | Diphenylether | 2 Mol-% Bu₄PBr | 120 | 3 | 18,9 g / 78% |
| k | Dibenzylether | 2 Mol-% Bu₄PBr | 120 | 4,5 | 17,5 g / 72% |
| l | Marlotherm SH (Dibenzyltoluol) | 2 Mol- % Bu₄PBr | 120 | 5 | 19,9 g / 82% |
| m | Tributyrin (Glycerintributyrat) | 2 Mol-% Bu₄PBr | 120 | 3 | 19,2 g / 79% |
| n | Plaxolene 25 | 2 Mol-% Bu₄PBr | 120 | 5 | 18,0 g / 74% |

### Beispiel 10. Synthese von (Acetoxymethyl)methoxydimethylsilan, Aufarbeitung des Destillationsrückstandes durch Filtration

(MeO)Me₂SiCH₂Cl + NaOC(O)Me -> (MeO)Me₂SiCH₂OC(O)Me + NaCl

Eine Mischung aus 61,1 kg Hydroseal G 400 H und 50 kg (609,4 mol) Natriumacetat wurde 1,5 h bei 150 °C / 2 mbar ausgeheizt (Trocknung). Nach Abkühlung auf unter 120°C wurde das Vakuum mit Stickstoff gebrochen, 3,76 kg (11,1 mol) Tetrabutylphosphoniumbromid zugegeben und die Temperatur auf 120 °C eingestellt. Innerhalb von 2,5 h wurden nun unter Rühren bei dieser Temperatur 73,2 kg (528 mol) (Chlormethyl)methoxydimethylsilan zudosiert. Das Gemisch wurde anschließend weitere 4 h bei derselben Temperatur gerührt. Dann wurde das Produkt über eine Kolonne bei 20 mbar (Kopf), 46-55 °C (Kopf) und 73-145 °C (Blase) herausdestilliert, wobei während der Destillation zur Gewährleistung der Rührbarkeit weitere 36,7 kg Hydroseal G 400 H zudosiert wurden. Das Produkt (Acetoxymethyl)methoxydimethylsilan (80,4 kg, 495,5 mol, 94% d.Th.; Reinheit 99,4% (GC-Flächen-%)) wurde als farblose Flüssigkeit erhalten. Das Lösungsmittel, Natriumchlorid, überschüssiges Natriumacetat und der Phasentransferkatalysator in Form des Chlorid-, Bromid- und Acetatsalzes des Tetrabutylphosphoniums verblieben im Sumpf. Aufarbeitung des Sumpfes durch Filtration mittels einer Stülpfilterzentrifuge ergab 93 kg Filtrat (Hydroseal) und 41 kg Feststoff (NaCl, NaOAc, Bu₄PBr; Anionen und Kationen z.T. ausgetauscht). Der Filterkuchen wurde mit Xylol (Isomerengemisch, 2 x 20 L) gewaschen und erneut nach derselben Methode filtriert. Das Filtrat enthielt den in Xylol löslichen Phasentransferkatalysator in Form des Chlorid-, Bromid- und Acetatsalzes des Tetrabutylphosphoniums, der Filterkuchen enthielt vor allem die Natriumsalze des Chlorids, z.T. auch des Acetats und des Bromids. Das so wiedergewonnene Lösungsmittel und der wiedergewonnene Katalysator können wieder eingesetzt werden, wobei das Xylol optional abdestilliert oder mit eingesetzt werden kann.

### Beispiel 11. Synthese von (Acetoxymethyl)methoxydimethylsilan, Aufarbeitung des Destillationsrückstandes durch Hydrolyse

(MeO)Me₂SiCH₂Cl + NaOC(O)Me -> (MeO)Me₂SiCH₂OC(O)Me + NaCl

### Beispiel 11a Reaktion und Aufarbeitung

Eine Mischung aus 61,1 kg Hydroseal G 400 H und 50 kg (609,4 mol) Natriumacetat wurde 1 h bei 150 °C / 2 mbar ausgeheizt (Trocknung). Nach Abkühlung auf 112°C wurde das Vakuum mit Stickstoff gebrochen, 3,76 kg (11,1 mol) Tetrabutylphosphoniumbromid zugegeben und die Temperatur auf 120 °C eingestellt. Innerhalb von 1 h wurden nun unter Rühren bei dieser Temperatur 76,8 kg (554 mol) (Chlormethyl)methoxydimethylsilan zudosiert. Das Gemisch wurde anschließend weitere 6 h bei derselben Temperatur gerührt. Dann wurde das Produkt über eine Kolonne bei 20 mbar (Kopf), 50-56 °C (Kopf) und 70-145 °C (Blase) herausdestilliert, wobei während der Destillation zur Gewährleistung der Rührbarkeit weitere 36,7 kg Hydroseal G 400 H zudosiert wurden. Das Produkt (Acetoxymethyl)methoxydimethylsilan (89,0 kg, 548,5 mol, 99% d.Th.; Reinheit 99,5% (GC-Flächen-%)) wurde als farblose Flüssigkeit erhalten. Das Lösungsmittel, Natriumchlorid, überschüssiges Natriumacetat und der Phasentransferkatalysator in Form des Chlorid-, Bromid- und Acetatsalzes des Tetrabutylphosphoniums verblieben im Sumpf.

### Beispiel 11b: Rückgewinnung von Lösungsmittel und Katalysator

Der Destillationssumpf wurde nach Abkühlung auf 80°C unter Rühren mit der Menge Wasser versetzt, die gerade ausreichte, um das Salz zu lösen (100 Liter). Beim Stehenlassen wurde Separation eines Gemisches aus drei klaren, flüssigen Phasen beobachtet: Oben, Hydroseal-reiche Phase (100 kg), gelb; Mitte, Katalysator-reiche Phase (Katalysator in Form des Chlorid-, Bromid- und Acetatsalzes des Tetrabutylphosphoniums; 4 kg), dunkelbraun; unten, wässrige Phase mit gelösten Natriumsalzen (Chlorid, Bromid, Acetat; 134 kg), gelb. Die wässrige Phase wurde abgetrennt, mit 25 L *n*-Butanol versetzt und eine Stunde gerührt. Nach Phasentrennung wurde in der wässrigen Phase befindliches *n*-Butanol entfernt, indem 1/10 der wässrigen Phase bei 98-105 °C (Sumpf) bei atmosphärischem Druck (rund 1 bar absolut) abdestilliert wurden (2-phasiges Destillat, hauptsächlich bestehend aus *n*-Butanol und Wasser); durch Azeotropdestillation wurde eine im Rahmen der Nachweisgrenze (¹H-NMR-Kontrolle, D₂O) butanol- und kohlenwasserstofffreie wässrige Phase erhalten.

### Beispiel 11c: Wiedereinsatz (Recycling) von Lösungsmittel und Katalysator

Gemäß Beispiel 11b wiedergewonnenes Lösungsmittel und wiedergewonnener Katalysator waren unter Kombination der Methoden aus Beispiel 5a (Entfernen des n-Butanols aus der Hydroseal- und aus der Katalysatorphase), Beispiel 5e (Trocknung) und Beispiel 11a (Reaktion) zur Herstellung von (Acetoxymethyl)methoxydimethylsilan wieder einsetzbar.

Beispiel 11 zeigt, wie ein Produkt des erfindungsgemäßen Verfahrens ohne einen einzigen zeitraubenden Filtrationsschritt aufgearbeitet werden kann, wie Lösungsmittel und Katalysator durch wässrige Aufarbeitung zurückgewonnen werden können und wie die dabei anfallende wässrige Phase vom Katalysator und von Lösungsmitteln befreit werden kann, so dass die Salzfracht in Form der aufgearbeiteten wässrige Phase der Entsorgung zugeführt werden kann.

### Beispiel 12. Synthese von (Acetoxymethyl)methoxydimethylsilan, Lösungsmittelzugabe erst während der Destillation

(MeO)Me₂SiCH₂Cl + NaOC(O)Me -> (MeO)Me₂SiCH₂OC(O)Me + NaCl

Eine Mischung aus 230,4 kg (1,662 kmol) (Chlormethyl)methoxydimethylsilan und 11,8 kg (34,8 mol) Tetrabutylphosphoniumbromid wurde auf 90°C aufgeheizt und innerhalb von 3 h so mit 150 kg (1,828 kmol) Natriumacetat (wasserfrei) in 6 Portionen ä 25 kg versetzt, so dass die Temperatur nicht über 114 °C stieg. Das Gemisch wurde anschließend 1 h ohne zusätzliche Heizung und dann noch 2 h bei 115-122°C gerührt. Hernach wurde das Produkt über eine Kolonne bei 18-30 mbar (Kopf), 50-53°C (Kopf) und 84-120°C (Blase) herausdestilliert, wobei während der Destillation zur Gewährleistung der Rührbarkeit 150 kg Hydroseal G 400 H zum Sumpf dosiert wurden. Das Produkt (Acetoxymethyl)methoxydimethylsilan (249,2 kg, 1,536 kmol, 92% d.Th.; Reinheit 99,6% (GC-Flächen-%)) wurde als farblose Flüssigkeit erhalten. Das Lösungsmittel, Natriumchlorid, überschüssiges Natriumacetat und der Phasentransferkatalysator in Form des Chlorid-, Bromid- und Acetatsalzes des Tetrabutylphosphoniums verblieben im Sumpf.

## Patentansprüche

1. Verfahren zur Herstellung von Silanen der allgemeinen Formel I,
R¹-C(=O)-O-R²-SiR³₃ (I),
durch Umsetzung mindestens eines Salzes einer Carbonsäure der allgemeinen Formel II
[R¹-C(=O)-=]ₐ[M^{a+}] (II),
mit mindestens einem Silan der allgemeinen Formel III
X-R²-SiR³₃ (III),
wobei das Verfahren mindestens einen destillativen Verfahrensschritt aufweist, bei dem das Destillat mindestens ein Silan der allgemeinen Formel I enthält und mindestens ein hochsiedendes Lösungsmittel **HS-LM** anwesend ist,
wobei **HS-LM,** gemessen bei dem Druck, bei dem der destillative Verfahrensschritt durchgeführt wird, einen höheren Siedepunkt aufweist als das Silan der allgemeinen Formel I, und wobei
**X** eine Abgangsgruppe, die durch ein Carboxylat substituierbar ist,
**R¹** einen unsubstituierten oder mit einer oder mehreren Gruppen **Q** substituierten einbindigen C₁-C₁₈ Kohlenwasserstoffrest, der durch ein oder mehrere Heteroatome unterbrochen sein kann, oder ein Wasserstoffatom bedeuten,
**Q** wenn es an ein sp³-hybrisiertes Kohlenstoffatom gebunden ist, ausgewählt wird aus Kohlenwasserstoffoxy-, Acyloxy-, Kohlenwasserstoffcarbonyl-, Carbonyl-, Kohlenwasserstoff-oxycarbonyl-, Kohlenwasserstoffsulfid-, Acylsulfid-, Cyano- und Nitrogruppen,
und wenn es an ein sp²- oder an ein sp-hybridisiertes Kohlenstoffatom gebunden ist, ausgewählt wird aus Kohlenwasserstoffoxy-, Acyloxy-, Kohlenwasserstoffcarbonyl-, Carbonyl-, Kohlenwasserstoffoxycarbonyl-, Kohlenwasserstoffsulfid-, Acylsulfid-, Cyano- und Nitrogruppen und aus den Bedeutungen von **X,**
**R²** eine unsubstituierte oder mit einer oder mehreren Gruppen **Q** substituierte zweibindige C₁-C₁₈ Kohlenwasserstoffgruppe, die durch ein oder mehrere Heteroatome unterbrochen sein kann,
**R³** Wasserstoff, eine unsubstituierte oder mit einer oder mehreren Gruppen **Q** substituierte einbindige C₁-C₁₈ Kohlenwasserstoffgruppe, C₁-C₁₈ Kohlenwasserstoffoxygruppe, Si₁-Si₄ Silangruppe oder eine Si₁-Si₄ Siloxygruppe, die durch ein oder mehrere Heteroatome unterbrochen sein kann,
**M^{a+}** ein a-fach positiv geladenes Kation und
**a** ganzzahlige Werte größer oder gleich 1 bedeuten.

2. Verfahren nach Anspruch 1, bei dem R² ausgewählt wird aus -CH₂- oder -CH₂CH₂CH₂-.

3. Verfahren nach Anspruch 1 oder 2, bei dem das Gemisch, das aus der Reaktion des Carbonsäuresalzes der allgemeinen Formel II mit dem Silan der allgemeinen Formel III stammt, ohne einen Filtrationsschritt, direkt einem destillativen Verfahrensschritt zugeführt wird.

4. Verfahren nach Anspruch 1 bis 3, bei dem das Gemisch, das aus der Reaktion des Carbonsäuresalzes der allgemeinen Formel II mit dem Silan der allgemeinen Formel III stammt, ohne weitere Verfahrensschritte, direkt einem destillativen Verfahrensschritt zugeführt wird.

5. Verfahren nach Anspruch 1 bis 4, welches in Anwesenheit von Katalysator durchgeführt wird.

6. Verfahren nach Anspruch 5, bei dem der Katalysator ein Phasentransferkatalysator ist.

7. Verfahren nach Anspruch 5, bei dem der Katalysator ein Salz des Bromids oder Iodids ist und die Gruppe **X-R²** im Silan der allgemeinen Formel III durch Substitution von **X** durch Bromid oder Iodid aktiviert.

8. Verfahren nach Anspruch 1 bis 7, bei dem weniger als 80% an Lösungsmitteln eingesetzt werden, die im destillativen Verfahrensschritt einen Siedepunkt gleich oder unter dem des Silans der allgemeinen Formel I aufweisen, berechnet in Gewichts-% bezogen auf die Summe aller im Verfahren eingesetzten Lösungsmittel, wobei die Siedepunkte bei dem Druck gemessen werden, bei dem der destillative Verfahrensschritt ausgeführt wird.

9. Verfahren nach Anspruch 1 bis 8, bei dem der Anteil an Lösungsmitteln, die den Kriterien für **HS-LM** entsprechen, bezogen in Gewichts-% auf die Summe aller im Verfahren eingesetzten Lösungsmittel, mindestens 20% beträgt.

10. Verfahren nach Anspruch 8 oder 9, bei dem kein Lösungsmittel eingesetzt wird, dessen Siedepunkt gleich oder unter dem des Silans der allgemeinen Formel I liegt, wobei die Siedepunkte bei dem Druck gemessen werden, bei dem der destillative Verfahrensschritt ausgeführt wird.

## Claims

1. Process for producing silanes of general formula I
R¹-C(=O)-O-R²-SiR³₃ (I)
by reacting at least one salt of a carboxylic acid of general formula II
(R¹-C(=O)-O]ₐ[M^{a+}] (II)
with at least one silane of general formula III
X-R²-SiR³₃ (III),
wherein said process includes at least one distillative step wherein the distillate contains at least one silane of general formula I and at least one high-boiling solvent **HS-LM** is present, wherein **HS-LM,** when measured at the pressure at which the distillative step is carried out, has a higher boiling point than the silane of general formula I,
and wherein
**X** is a leaving group which is carboxylate substitutable,
**R¹** is a monovalent C₁-C₁₈ hydrocarbon radical which is unsubstituted or substituted with one or more groups **Q** and which may be interrupted by one or more heteroatoms, or is a hydrogen atom,
**Q** when attached to an sp³-hybridized carbon atom is selected from hydrocarbonoxy, acyloxy, hydrocarboncarbonyl, carbonyl, hydrocarbonoxycarbonyl, hydrocarbonsulfide, acylsulfide, cyano and nitro groups,
and when attached to an sp²- or to an sp-hybridized carbon atom, is selected from hydrocarbonoxy, acyloxy, hydrocarboncarbonyl, carbonyl, hydrocarbonoxycarbonyl, hydrocarbonsulfide, acylsulfide, cyano and nitro groups and from the meanings of **X,**
**R²** is a divalent C₁-C₁₈ hydrocarbon group which is unsubstituted or substituted with one or more groups **Q** and which may be interrupted by one or more heteroatoms,
**R³** is hydrogen, an unsubstituted or **Q**-mono- or -polysubstituted monovalent C₁-C₁₈ hydrocarbon group, C₁-C₁₈ hydrocarbonoxy group, Si₁-Si₄ silane group or an Si₁-Si₄ siloxy group which may be interrupted by one or more heteroatoms,
**M^{a+}** is an a-tuply positively charged cation, and
**a** is an integer not less than 1.

2. Process according to Claim 1 wherein **R²** is selected from -CH₂ - or -CH₂CH₂CH₂-.

3. Process according to Claim 1 or 2 wherein the mixture from the reaction of the carboxylic acid salt of general formula II with the silane of general formula III is fed directly, without a filtration step, into a distillative step.

4. Process according to Claim 1 or 2 or 3 wherein the mixture from the reaction of the carboxylic acid salt of general formula II with the silane of general formula III is fed directly, without further steps, into a distillative step.

5. Process according to Claim 1 or 2 or 3 or 4 in the presence of a catalyst.

6. Process according to Claim 5 wherein the catalyst is a phase transfer catalyst.

7. Process according to Claim 5 wherein the catalyst is a salt of bromide or of iodide and activates the group **X-R²** in the silane of general formula III by substitution of **X** by bromide or iodide.

8. Process according to Claim 1 or 2 or 3 or 4 or 5 or 6 or 7 wherein less than 80% of solvents used have a boiling point in the distillative step which is equal to or below that of the silane of general formula I, calculated in weight % based on the sum total of all solvents used in the process, wherein the boiling points are measured at the pressure at which the distillative step is carried out.

9. Process according to Claim 1 or 2 or 3 or 4 or 5 or 6 or 7 or 8 wherein the proportion of solvents which meet the criteria for **HS-LM** is at least 20%, based in weight % on the sum total of all solvents used in the process.

10. Process according to Claim 8 or 9 utilizing no solvent with a boiling point equal to or below that of the silane of general formula I, wherein the boiling points are measured at the pressure at which the distillative step is carried out.

## Revendications

1. Procédé pour la préparation de silanes de formule générale I
R1-C(=O)-O-R²-SiR³₃ (I),
par transformation d'au moins un sel d'un acide carboxylique de formule générale II
[R¹-C(=O)-O]ₐ[M^{a+}] (II),
avec au moins un silane de formule générale III
X-R²-SiR³₃ (III),
le procédé présentant au moins une étape de procédé par distillation, dans laquelle le distillat contient au moins un silane de formule générale I et au moins un solvant à point d'ébullition élevé S-PE est présent, S-PE présentant un point d'ébullition, mesuré à la pression à laquelle l'étape de procédé par distillation est réalisée, supérieur à celui du silane de formule générale I et
X représentant un groupe partant qui peut être substitué par un carboxylate,
R¹ signifiant un radical hydrocarboné en C₁-C₁₈, monovalent, non substitué ou substitué par un ou plusieurs groupes Q, qui peut être interrompu par un ou plusieurs hétéroatomes, ou un atome d'hydrogène,
Q lorsqu'il est lié à un atome de carbone hybridé en sp³, étant choisi parmi les groupes hydrocarbureoxy, acyloxy, hydrocarbure-carbonyle, carbonyle, hydrocarbure-oxycarbonyle, hydrocarbure-sulfure, acylsulfure, cyano et nitro,
lorsqu'il est lié à un atome de carbone hybridé en sp² ou en sp, étant choisi parmi les groupes hydrocarbure-oxy, acyloxy, hydrocarbure-carbonyle, carbonyle, hydrocarbure-oxycarbonyle, hydrocarbure-sulfure, acylsulfure, cyano et nitro et parmi les significations de X,
R² signifiant un groupe hydrocarboné en C₁-C₁₈, divalent, non substitué ou substitué par un ou plusieurs groupes Q, qui peut être interrompu par un ou plusieurs hétéroatomes,
R³ signifiant hydrogène, un groupe hydrocarboné en C₁-C₁₈, un groupe hydrocarbure-oxy en C₁-C₁₈, un groupe Si₁-Si₄-silane ou un groupe Si₁-Si₄-siloxy, monovalent, non substitué ou substitué par un ou plusieurs groupes Q, qui peut être interrompu par un ou plusieurs hétéroatomes,
M^{a+} signifiant un cation chargé de a charges positives et
a signifiant des valeurs entières supérieures ou égales à 1.

2. Procédé selon la revendication 1, R² étant choisi parmi -CH₂- ou -CH₂CH₂CH₂-.

3. Procédé selon la revendication 1 ou 2, le mélange, provenant de la réaction du sel d'acide carboxylique de formule générale II avec le silane de formule générale III, étant introduit sans étape de filtration, directement dans une étape de procédé de distillation.

4. Procédé selon les revendications 1 à 3, le mélange, provenant de la réaction du sel d'acide carboxylique de formule générale II avec le silane de formule générale III, étant introduit sans autres étapes de procédé, directement dans une étape de procédé de distillation.

5. Procédé selon les revendications 1 à 4, qui est réalisé en présence d'un catalyseur.

6. Procédé selon la revendication 5, dans lequel le catalyseur est un catalyseur à transfert de phase.

7. Procédé selon la revendication 5, dans lequel le catalyseur est un sel du bromure ou de l'iodure et active le groupe X-R² dans le silane de formule générale III par substitution de X par du bromure ou de l'iodure.

8. Procédé selon les revendications 1 à 7, dans lequel on utilise moins de 80% de solvants, qui présentent, dans l'étape de procédé de distillation, un point d'ébullition égal ou inférieur à celui du silane de formule générale I, calculés en % en poids par rapport à la somme de tous les solvants utilisés dans le procédé, les points d'ébullition étant mesurés à la pression à laquelle l'étape de procédé de distillation est réalisée.

9. Procédé selon les revendications 1 à 8, dans lequel la proportion de solvants, qui correspondent aux critères pour le S-PE, en % en poids, par rapport à la somme de tous les solvants utilisés dans le procédé, est d'au moins 20%.

10. Procédé selon la revendication 8 ou 9, dans lequel on n'utilise pas de solvant dont le point d'ébullition est égal ou inférieur à celui du silane de formule générale I, les points d'ébullition étant mesurés à la pression à laquelle l'étape de procédé de distillation est réalisée.
